# EUROPÄISCHE PATENTSCHRIFT

(11) **EP 2 559 922 B1**
(45) Veröffentlichungstag und Bekanntmachung des Hinweises auf die Patenterteilung: **19.03.2014**
(21) Anmeldenummer: 12179487.9
(22) Anmeldetag: 07.08.2012
(51) Int. Cl.: F16J 15/32

(54) **Dichtung zum Abdichten eines Dichtspalts und Verfahren zum Herstellen einer solchen Dichtung**
Joint destiné à étanchéifier une fente étanche et procédé de fabrication d'un tel joint
Seal for sealing a sealed gap and method for producing same

(30) Priorität: 15.08.2011 DE 102011080970
(43) Veröffentlichungstag der Anmeldung: 20.02.2013
(73) Patentinhaber: ElringKlinger AG, 72581 Dettingen (DE)
(72) Erfinder: Daub, Oliver, 71686 Remseck (DE); Grau, Günther, 74321 Bietigheim-Bissingen (DE); Hocker, Klaus, 74379 Ingersheim (DE); Konik, Adam, 74343 Sachsenheim (DE); Neuschwander, Werner, 74363 Güglingen (DE); Kopp, Fabian, 71732 Tamm (DE); Schuhmacher, Walter, 74321 Bietigheim-Bissingen (DE)
(74) Vertreter: Hoeger, Stellrecht & Partner Patentanwälte

(56) Entgegenhaltungen:
- US-A- 3 903 584
- US-A1- 1 621 272

## Beschreibung

Die vorliegende Erfindung betrifft eine Dichtung zum Abdichten eines Dichtspalts zwischen einem ersten Bauteil und einem zweiten Bauteil, wobei die Dichtung einen Dichtungskörper mit mindestens einem Dichtabschnitt und mindestens ein Federelement zum Vorspannen des Dichtabschnitts gegen eines der abzudichtenden Bauteile umfasst,
wobei das Federelement zumindest teilweise, vorzugsweise im wesentlichen vollständig, in einem Aufnahmeraum des Dichtungskörpers angeordnet ist.

Solche Dichtungen sind aus dem Stand der Technik bekannt. Insbesondere werden solche Dichtungen von der Firma ElringKlinger Kunststofftechnik GmbH, 74321 Bietigheim-Bissingen, Deutschland, unter der Bezeichnung "federunterstützter Nutring" vertrieben.

Um das Federelement gegen ein ungewolltes Herausbewegen desselben aus dem Aufnahmeraum zu sichern, ist an dem Dichtungskörper dieser bekannten Dichtungen eine sogenannte Rückhaltenase vorgesehen, an welcher das Federelement beim Einbringen des Federelements in den Aufnahmeraum vorbeibewegt wird und welches eine Hinterschneidung bildet, hinter welche das Federelement einrastet, so dass das Federelement durch die Rückhaltenase in dem Aufnahmeraum zurückgehalten wird.

Für die Herstellung der Rückhaltenase ist allerdings ein zusätzlicher Dreharbeitsgang erforderlich, für welchen ein separates Drehwerkzeug benötigt wird. Da dieses Drehwerkzeug relativ filigran ist, nutzt es sich, insbesondere durch im Material des Dichtungskörpers enthaltene Füllstoffe, sehr schnell ab. Die Abnutzung des Drehwerkzeugs führt dazu, dass die Rückhaltenase nicht mehr einwandfrei ausgedreht wird. Hierdurch können unerwünschte Fusseln entstehen, welche sich im Einsatz der Dichtung vom Dichtungskörper ablösen und zu Problemen in der Dichtheit der Dichtung und zu Problemen in der die Dichtung enthaltenden Baugruppe führen können (beispielsweise zu einem Verstopfen von Düsen oder Filtern).

Es muss daher relativ häufig ein Wechsel des Drehwerkzeugs vorgenommen werden.

Die US-A-1 621 272 offenbart eine Dichtung gemäß dem Oberbegriff von Anspruch 1.

Der vorliegenden Erfindung liegt die Aufgabe zugrunde, eine Dichtung der eingangs genannten Art zu schaffen, welche einfach aufgebaut und einfach herstellbar ist und dennoch eine sichere Zurückhaltung des Federelements in dem Aufnahmeraum gewährleistet.

Diese Aufgabe wird durch eine Dichtung nach Anspruch 1 gelöst.

Der vorliegenden Erfindung liegt somit das Konzept zugrunde, das Federelement selbst so auszugestalten, dass es sich so form- und/oder kraftschlüssig mit dem Dichtungskörper verkrallt, dass das Federelement sich nicht mehr ungewollt aus dem Aufnahmeraum des Dichtungskörpers lösen kann.

Es ist daher bei der erfindungsgemäßen Dichtung nicht mehr erforderlich, den Dichtungskörper mit einer Rückhaltenase zu versehen.

Hierdurch entfallen die für die Herstellung der Rückhaltenase sonst erforderliche aufwendige CNC-Bearbeitung des Dichtungskörpers einschließlich des hohen Werkzeugverschleißes und des hohen Kostenaufwandes. Ferner entfällt das Risiko der Bildung unerwünschter Fusseln an der Rückhaltenase.

Das Federelement der erfindungsgemäßen Dichtung sichert sich selbst an dem Dichtungskörper.

Grundsätzlich kommt für die Herstellung des Dichtungskörpers jedes geeignete Material in Frage, das unter den Einsatzbedingungen der Dichtung stabil ist.

Insbesondere kann der Dichtungskörper ein Kunststoffmaterial umfassen, vorzugsweise im Wesentlichen vollständig aus einem Kunststoffmaterial hergestellt sein.

In Frage kommende Kunststoffe sind insbesondere Fluorpolymer-Materialien.

Besonders günstig, insbesondere zum Einsatz des Dichtungselements in aggressiver Umgebung, ist es, wenn der Dichtungskörper ein Polytetrafluorethylen-Material und/oder ein Polytetrafluorethylen-Compound umfasst, vorzugsweise im Wesentlichen vollständig aus einem der genannten Materialien gebildet ist.

Unter einem Polytetrafluorethylen-Compound ist dabei ein Gemisch aus einem Polytetrafluorethylen-Material und einem oder mehreren Füllstoffen zu verstehen.

Der Begriff Polytetrafluorethylen (PTFE) bezeichnet dabei in dieser Beschreibung und den beigefügten Ansprüchen auch modifizierte Polytetrafluorethylen-Materialien, bei denen ein Teil der Fluoratome des Polytetrafluorethylen durch Substituenten ersetzt ist.

Durch den Wegfall des Erfordernisses von filigranen Drehwerkzeugen zur Herstellung einer Rückhaltenase können für den Dichtungskörper der erfindungsgemäßen Dichtung insbesondere hoch gefüllte (das heißt einen hohen Anteil an Füllstoffen aufweisende), schwer zerspanbare PTFE-Compounds verwendet werden, ohne die für die Herstellung des Dichtungskörpers erforderlichen CNC-Werkzeugkosten drastisch zu erhöhen.

Alternativ oder ergänzend hierzu kann auch vorgesehen sein, dass der Dichtungskörper ein schmelzverarbeitbares TFE(Tetrafluorethylen)-Copolymer oder ein Compound eines schmelzverarbeitbaren TFE-Copolymers umfasst, vorzugsweise im Wesentlichen vollständig aus einem solchen schmelzverarbeitbaren TFE-Copolymer oder aus einem Compound eines solchen schmelzverarbeitbaren TFE-Copolymers gebildet ist.

Geeignete schmelzverarbeitbare TFE-Copolymere sind insbesondere in der EP 1 263 877 B1 beschrieben.

Vorzugsweise wird ein schmelzverarbeitbares TFE-Copolymer aus TFE und einem fluorierten Comonomer in einem Anteil von weniger als 1 Mol-% verwendet.

Das Comonomer ist bevorzugt ausgewählt aus
- Hexafluorpropylen;
- Perfluoralkylvinylethern (inbesondere Perfluorethylvinylether und Perfluorpropylvinylether);
- Perfluor-(2,2-dimethyl-1,3-dioxol).

Bei einer besonderen Ausgestaltung der Dichtung ist der Dichtungskörper als ein Spritzgießteil, vorzugsweise aus einem schmelzverarbeitbaren TFE-Copolymer oder einem Compound eines schmelzverarbeitbaren TFE-Copolymers, ausgebildet.

Wenn der Dichtungskörper keinen Rückhaltevorsprung, insbesondere keine Rückhaltenase, zum Zurückhalten des Federelements in dem Aufnahmeraum aufweist, ist der Dichtungskörper besonders einfach als ein Spritzgießteil herstellbar, da der gespritzte Dichtungskörper dann einfach aus dem Spritzwerkzeug entformbar ist.

Vorzugsweise weist das Federelement ein oder mehrere Krallenelemente auf, die an abgespreizten Stegen des Federelements angeordnet sind.

Durch die Krallenelemente zentriert sich die mit dem Dichtungskörper verkrallte Feder selbsttätig in dem Aufnahmeraum. Das Federelement bewegt sich somit nach seiner Montage am Dichtungskörper nicht mehr relativ zu Begrenzungswänden des Aufnahmeraums und ist vorzugsweise so innerhalb des Aufnahmeraums positioniert, dass es auf einander gegenüberliegende Dichtabschnitte des Dichtungskörpers, welche an verschiedenen abzudichtenden Bauteilen anliegen, im Wesentlichen gleiche Vorspannkräfte ausübt. Hierdurch können besonders gleichmäßige Anpressungen von Dichtlippen der Dichtabschnitte an die jeweils abgedichteten Bauteile und somit eine besonders gute Fluid-Dichtheit der erfindungsgemäßen Dichtung erzielt werden.

Ferner wird durch die Selbstzentrierung des Federelements in dem Aufnahmeraum des Dichtungskörpers auch erreicht, dass die Vorspannkraft des Federelements auf die Dichtabschnitte längs der Umfangsrichtung des Federelements im Wesentlichen konstant ist. Auch dies trägt zu einer Vergleichmäßigung der Dichtlippenanpressungen längs der Umfangsrichtung der Dichtung bei, was die Fluid-Dichtheit der erfindungsgemäßen Dichtung erhöht und die Gefahr von Leckagen verringert.

Im Gegensatz hierzu kann sich bei federunterstützten Nutringen, bei denen das Federelement nur durch eine Rückhaltenase im Aufnahmeraum zurückgehalten wird, aufgrund von Toleranzsummierungen der Nutgeometrie im Dichtungskörper und der Federgeometrie der Rücken des Federelements im Nutgrund bewegen, so dass das Federelement sich mehr an einen inneren Dichtabschnitt oder mehr an einen äußeren Dichtabschnitt anlegt. Dies hat zur Folge, dass das Federelement unterschiedliche Vorspannkräfte auf die einander gegenüberliegenden Dichtabschnitte des Dichtungskörpers ausübt, was unterschiedliche Dichtkräfte an den abzudichtenden Bauteilen zur Folge hat.

Außerdem zentriert sich ein nur durch eine Rückhaltenase im Aufnahmeraum des Dichtungskörpers zurückgehaltenes Federelement nicht automatisch in der den Aufnahmeraum bildenden Nut, so dass an den Dichtabschnitten des Dichtungskörpers unterschiedliche Dichtlippenanpressungen auftreten, was Leckagen ermöglicht.

Diese Nachteile werden durch die erfindungsgemäße Dichtung, bei welcher das Federelement mit dem Dichtungskörper verkrallt ist, vermieden oder zumindest reduziert.

Durch den Wegfall der Rückhaltenase am Dichtungskörper besteht auch nicht mehr die Gefahr, dass eine solche Rückhaltenase während der Montage des Federelements am Dichtungskörper beschädigt wird. Somit kann auch keine zusätzliche Fusselbildung aufgrund einer Beschädigung einer Rückhaltenase auftreten. Ferner besteht auch nicht mehr die Gefahr, dass sich das Federelement aufgrund eines Defekts an einer Rückhaltenase aus dem Aufnahmeraum heraus verschiebt und hierdurch einen Ausfall der Dichtung bewirkt.

Bei der Erfindung ist vorgesehen, dass das Federelement einen mäanderförmigen Grundkörper umfasst.

Mindestens ein Krallenelement umfasst mindestens einen an dem Grundkörper des Federelements angeordneten Vorsprung.

Wenn der Dichtungskörper ringförmig ausgebildet ist, so ist vorzugsweise mindestens ein Krallenelement an einem Umfangsrichtungsabschnitt eines Grundkörpers des Federelements angeordnet, welcher sich im Wesentlichen längs der Umfangsrichtung des Dichtungskörpers erstreckt.

Der Aufnahmeraum des Dichtungskörpers kann an einer Mündungsöffnung in einen Außenraum des Dichtungskörpers münden. Durch eine solche Mündungsöffnung kann das Federelement bei der Montage der Dichtung zumindest teilweise in den Aufnahmeraum des Dichtungskörpers eingebracht werden.

Ferner kann der Aufnahmeraum des Dichtungskörpers an einer der Mündungsöffnung gegenüberliegenden Seite durch eine Stirnwand oder einen Nutgrund geschlossen sein.

Vorzugsweise weist das Federelement mindestens zwei Krallenelemente auf, welche in im Wesentlichen demselben Abstand von der Mündungsöffnung des Aufnahmeraums angeordnet sind. Hierdurch wird eine besonders genaue Selbstzentrierung des Federelements in Bezug auf den Aufnahmeraum erzielt.

Alternativ oder ergänzend hierzu kann vorgesehen sein, dass das Federelement mindestens zwei Krallenelemente aufweist, welche in unterschiedlichen Abständen von der Mündungsöffnung des Aufnahmeraums angeordnet sind. Hierdurch wird eine besonders gleichmäßige Verteilung der von dem Federelement auf den Dichtungskörper ausgeübten elastischen Vorspannkraft längs einer Längsrichtung oder Axialrichtung des Federelements, des Dichtungskörpers und/oder der Dichtung erzielt.

Bei einer bevorzugten Ausgestaltung der Erfindung ist vorgesehen, dass der Dichtungskörper einen ersten Dichtabschnitt, beispielsweise einen radial äußeren Dichtabschnitt, zum Anlegen an das erste Bauteil und einen zweiten Dichtabschnitt, beispielsweise einen radial inneren Dichtabschnitt, zum Anlegen an das zweite Bauteil umfasst, wobei das Federelement im montierten Zustand der Dichtung den ersten Dichtabschnitt gegen das erste Bauteil und den zweiten Dichtabschnitt gegen das zweite Bauteil vorspannt.

In diesem Fall ist es von Vorteil, wenn das Federelement mindestens ein Krallenelement aufweist, das mit dem ersten Dichtabschnitt verkrallt ist, und mindestens ein Krallenelement aufweist, das mit dem zweiten Dichtabschnitt verkrallt ist.

Hierdurch wird eine besonders zuverlässige Sicherung des Federelements an beiden Dichtabschnitten erzielt.

Alternativ oder ergänzend hierzu kann vorgesehen sein, dass das Federelement mindestens zwei Krallenelemente aufweist, die mit demselben der beiden Dichtabschnitte verkrallt sind.

Das Federelement weist vorzugsweise mindestens ein Krallenelement auf, das an einer Begrenzungswand des Aufnahmeraums mit dem Dichtungskörper verkrallt ist. Hierdurch wird eine Sicherung des Federelements an dem Dichtungskörper innerhalb des Aufnahmeraums erzielt.

Alternativ oder ergänzend hierzu kann auch vorgesehen sein, dass das Federelement mindestens ein Krallenelement aufweist, das außerhalb des Aufnahmeraumes mit dem Dichtungskörper verkrallt ist. Auf diese Weise wird eine Sicherung des Federelements an dem Dichtungskörper außerhalb des Aufnahmeraums erzielt.

Eine Sicherung des Federelements an dem Dichtungskörper außerhalb des Aufnahmeraums kann insbesondere dadurch erzielt werden, dass der Dichtungskörper eine neben den Aufnahmeraum angeordnete Stirnfläche aufweist, wobei mindestens ein Krallenelement des Federelements an dieser Stirnfläche mit dem Dichtungskörper verkrallt ist.

Bei einer bevorzugten Ausgestaltung der erfindungsgemäßen Dichtung ist vorgesehen, dass der Dichtungskörper keinen Rückhaltevorsprung, insbesondere keine Rückhaltenase, zum Zurückhalten des Federelements in dem Aufnahmeraum aufweist.

Die vorliegende Erfindung betrifft ferner ein Verfahren zum Herstellen einer Dichtung zum Abdichten eines Dichtspalts zwischen einem ersten Bauteil und einem zweiten Bauteil.

Der vorliegenden Erfindung liegt die weitere Aufgabe zugrunde, ein solches Verfahren zu schaffen, welches einfach durchführbar ist und eine Dichtung mit einem Federelement ergibt, welches sicher (zumindest teilweise) in einem Aufnahmeraum eines Dichtungskörpers der Dichtung zurückgehalten wird.

Diese Aufgabe wird erfindungsgemäß durch ein Verfahren zum Herstellen einer Dichtung zum Abdichten eines Dichtspalts zwischen einem ersten Bauteil und einem zweiten Bauteil nach Anspruch 16 gelöst.

Besondere Ausgestaltungen des erfindungsgemäßen Verfahrens sind bereits vorstehend im Zusammenhang mit der erfindungsgemäßen Dichtung erläutert worden.

Das Federelement der erfindungsgemäßen Dichtung kann spezielle, abgespreizte Verkrallungsstege aufweisen.

Das Federelement lässt sich in einen Aufnahmeraum eines Dichtungskörpers, der vorzugsweise keine Rückhaltenase aufweist, einfach einpressen und verkrallt sich durch abspreizende Stege mit dem Dichtungskörper, insbesondere innerhalb des Aufnahmeraums des Dichtungskörpers, derart, dass sich das Federelement nicht mehr von dem Dichtungskörper lösen kann.

Der Aufnahmeraum des Dichtungskörpers ist vorzugsweise ringförmig ausgebildet, insbesondere als eine Ringnut.

Das Federelement kann nur einseitig oder beidseitig mit dem Dichtungskörper verkrallt sein.

Die erfindungsgemäße Dichtung eignet sich insbesondere als eine dynamische Dichtung zum Abdichten eines Dichtspalts zwischen zwei Bauteilen, welche relativ zueinander beweglich sind.

Die Relativbewegung zwischen dem ersten Bauteil und dem zweiten Bauteil kann dabei eine Linearbewegung und/oder eine Drehbewegung umfassen.

Die erfindungsgemäße Dichtung kann somit insbesondere als Stangendichtung oder Kolbendichtung oder als Radialwellendichtring verwendet werden.

Das Federelement umfasst vorzugsweise ein elastisches metallisches Material, vorzugsweise ein Federstahlmaterial, und ist insbesondere im Wesentlichen vollständig aus einem solchen elastischen metallischen Material gebildet.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen Schnitt durch eine Baugruppe mit einem ersten Bauteil, einem zweiten Bauteil und einer Dichtung zum Abdichten eines Dichtspalts zwischen dem ersten Bauteil und dem zweiten Bauteil;
- Fig. 2: einen schematischen radialen Schnitt durch die Dichtung der Baugruppe aus Fig. 1;
- Fig. 3: eine schematische Draufsicht auf eine Federelement-Vorform eines Federelements der Dichtung aus den Fig. 1 und 2;
- Fig. 4: eine ausschnittsweise schematische perspektivische Darstellung des Federelements der Dichtung aus den Fig. 1 und 2;
- Fig. 5: einen schematischen radialen Schnitt durch eine zweite Ausführungsform der Dichtung, bei welcher das Federelement mindestens zwei mit einem ersten Dichtabschnitt eines Dichtungskörpers der Dichtung in unterschiedlichen Axialpositionen verkrallte Krallenelemente und mindestens ein mit einem dem ersten Dichtabschnitt gegenüberliegenden zweiten Dichtabschnitt verkralltes Krallenelement aufweist;
- Fig. 6: eine Draufsicht auf eine Federlelement-Vorform des Federelements der Dichtung aus Fig. 5;
- Fig. 7: eine ausschnittsweise schematische perspektivische Darstellung des Federelements der Dichtung aus Fig. 5;
- Fig. 8: einen schematischen Schnitt durch eine Baugruppe mit einem ersten Bauteil, einem zweiten Bauteil und einer dritten Ausführungsform der Dichtung zum Abdichten des Dichtspalts zwischen dem ersten Bauteil und dem zweiten Bauteil, wobei das Feder-element der Dichtung mittels mindestens eines Krallenelements mit einem ersten Dichtabschnitt und mittels mindestens eines Krallenelements mit einem dem ersten Dichtabschnitt gegenüberliegenden zweiten Dichtabschnitt eines Dichtungskörpers der Dichtung verkrallt ist;
- Fig. 9: einen schematischen radialen Querschnitt durch eine vierte Ausführungsform der Dichtung, wobei das Federelement der Dichtung mittels mindestens eines Krallenelements mit dem ersten Dichtabschnitt und mittels mindestens eines Krallenelements mit dem zweiten Dichtabschnitt verkrallt ist;
- Fig. 10: einen schematischen radialen Querschnitt durch eine fünfte Ausführungsform der Dichtung, wobei das Federelement mittels mindestens eines Krallenelements mit dem ersten Dichtabschnitt und mittels mindestens eines Krallenelements mit dem zweiten Dichtabschnitt verkrallt ist;
- Fig. 11: einen schematischen radialen Querschnitt durch eine sechste Ausführungsform der Dichtung, wobei das Federelement mittels mindestens eines Krallenelements mit dem ersten Dichtabschnitt, aber nicht mit dem gegenüberliegenden zweiten Dichtabschnitt verkrallt ist;
- Fig. 12: einen schematischen radialen Querschnitt durch eine siebte Ausführungsform der Dichtung, wobei das Federelement mittels mindestens eines Krallenelements mit dem ersten Dichtabschnitt und mittels mindestens eines Krallenelements mit dem zweiten Dichtabschnitt verkrallt ist;
- Fig. 13: einen schematischen radialen Querschnitt durch eine achte Ausführungsform der Dichtung, wobei das Federelement mittels mindestens eines Krallenelements, das an einem einer Mündungsöffnung eines Aufnahmeraums, in welchem das Federelement angeordnet ist, zugewandten Ende des Federelements angeordnet ist, mit dem ersten Dichtabschnitt verkrallt ist und mittels mindestens eines Krallenelements, das ebenfalls an einem der Mündungsöffnung des Aufnahmeraums zugewandten Ende des Federelements angeordnet ist, mit dem zweiten Dichtabschnitt verkrallt ist;
- Fig. 14: einen schematischen radialen Querschnitt durch eine neunte Ausführungsform der Dichtung, wobei das Federelement mittels mindestens zweier Krallenelemente, die in unterschiedlichen Axialpositionen angeordnet sind, mit dem ersten Dichtabschnitt und mittels mindestens eines Krallenelements mit dem zweiten Dichtabschnitt verkrallt ist;
- Fig. 15: einen schematischen radialen Querschnitt durch eine zehnte Ausführungsform der Dichtung, wobei das Federelement mittels mindestens eines Krallenelements mit einer Stirnfläche des ersten Dichtabschnitts und mittels mindestens eines Krallenelements mit einer Stirnfläche des zweiten Dichtabschnitts verkrallt ist;
- Fig. 16: einen schematischen radialen Querschnitt durch das Federelement der Dichtung aus Fig. 15; und
- Fig. 17: einen schematischen radialen Querschnitt durch eine elfte Ausführungsform der Dichtung, wobei die Dichtung als eine Doppel-Dichtung mit zwei ersten Dichtabschnitten, zwei zweiten Dichtabschnitten und zwei mit dem Dichtungskörper verkrallten Federelementen ausgebildet ist.

Gleiche oder funktional äquivalente Elemente sind in allen Figuren mit denselben Bezugszeichen bezeichnet.

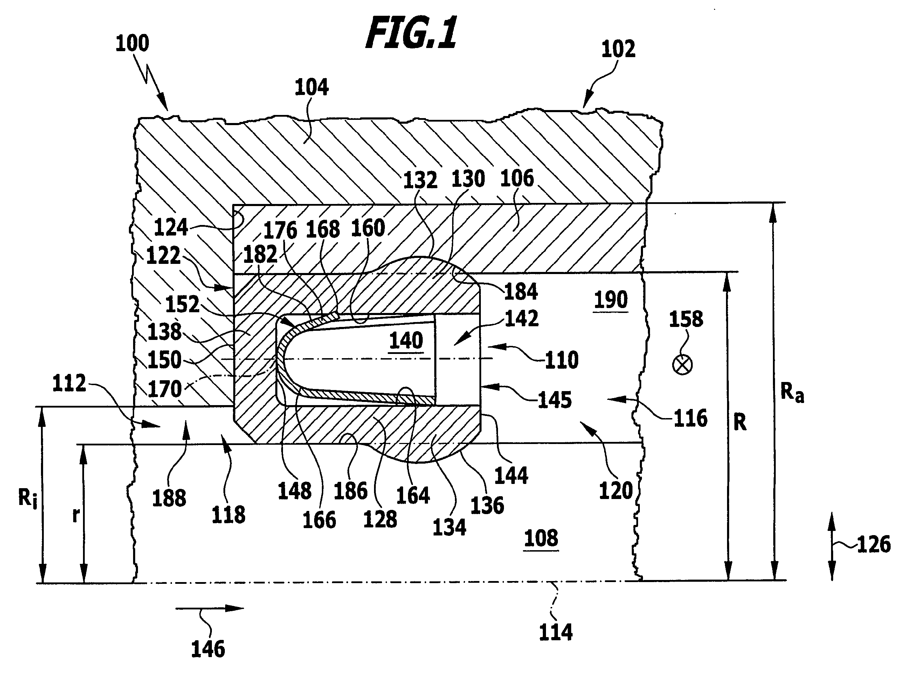

Eine in Fig. 1 auschnittsweise dargestellte Baugruppe 100 umfasst ein zusammengesetztes erstes Bauteil 102, das ein Basisteil 104 und einen Dichtungshalter 106 umfasst, ein zweites Bauteil 108, welches von dem ersten Bauteil 102 beispielsweise ringförmig umgeben ist, und eine Dichtung 110 zum Abdichten eines Dichtspalts 112 zwischen dem ersten Bauteil 102 und dem zweiten Bauteil 108.

Der Dichtungshalter 106 kann bei dieser Ausführungsform auch einstückig mit dem Basisteil 104 ausgebildet sein.

Das zweite Bauteil 108 ist zumindest abschnittsweise im Wesentlichen zylindrisch ausgebildet, mit einer Längsachse 114 und einem Außenradius r (siehe Fig. 1).

Das das zweite Bauteil 108 ringförmig umgebende Basisteil 104 des ersten Bauteils 102 weist einen gestuften Durchgangskanal 116 auf, welcher einen engeren Abschnitt 118 mit einem Radius Rᵢ und einen weiteren Abschnitt 120 mit einem Radius Rₐ aufweist.

Der engere Abschnitt 118 und der weitere Abschnitt 120 treffen an einer Stufe 122 mit einer ringförmigen, in einer Radialrichtung 126 der Baugruppe 100 verlaufenden Stirnfläche 124 aufeinander.

Die Dichtung 110 ist in dem weiteren Abschnitt 120 des Durchgangskanals 116 angeordnet.

Sie umfasst einen ringförmigen Dichtungskörper 128 mit einem im Wesentlichen U-förmigen radialen Querschnitt.

Der Dichtungskörper 128 umfasst einen ersten Dichtabschnitt 130, welcher einen radial äußeren Schenkel des Dichtungskörpers 128 bildet und im montierten Zustand der Dichtung 110 mit einer ersten Dichtlippe 132 abdichtend an dem ersten Bauteil 102, insbesondere an dem Dichtungshalter 106, anliegt; einen zweiten Dichtabschnitt 134, welcher einen radial inneren Schenkel des Dichtungskörpers 128 bildet und im montierten Zustand der Dichtung 110 mit einer zweiten Dichtlippe 136 an dem zweiten Bauteil 108 anliegt; und einen ringförmigen Steg 138, welcher ein Ende des ersten Dichtabschnitts 130 mit einem Ende des zweiten Dichtabschnitts 134 verbindet.

Die beiden Dichtabschnitte 130 und 134 des Dichtungskörpers 128 sind voneinander durch einen Aufnahmeraum 140, insbesondere in Form einer Ringnut 142, getrennt, welche sich von einer Mündungsöffnung 145 an einer offenen Stirnfläche 144 des Dichtungskörpers 128 ausgehend längs einer Axialrichtung 146 der Baugruppe 100 und der Dichtung 110 in den Dichtungskörper 128 hinein erstreckt und an einem Nutgrund 148 endet, welcher sich im Wesentlichen in der Radialrichtung 126 erstreckt und von einer sich ebenfalls im Wesentlichen in der Radialrichtung 126 erstreckenden geschlossenen Stirnfläche 150 des Dichtungskörpers 128 in der Axialrichtung 146 beabstandet ist.

Der Dichtungskörper 128 ist vorzugsweise einstückig aus einem geeigneten Kunststoffmaterial hergestellt.

Als geeignetes Kunststoffmaterial kommt insbesondere ein Flurpolymer-Material, beispielsweise PTFE oder ein PTFE-Compound, insbesondere auch modifiziertes PTFE oder ein modifiziertes PTFE-Compound, in Betracht.

Der im Wesentlichen rotationssymmetrische Dichtungskörper 128 kann insbesondere aus einem im Wesentlichen zylindrischen Grundkörper durch spanende Bearbeitung auf einer Drehmaschine hergestellt werden.

Alternativ hierzu kann der Dichtungskörper 128 auch, insbesondere durch Spritzgießen, aus einem schmelzverarbeitbaren TFE-Copolymer oder aus einem Compound eines schmelzverarbeitbaren TFE-Copolymers hergestellt sein.

Um die für eine fluiddichte Abdichtung gegenüber dem ersten Bauteil 102 und gegenüber dem zweiten Bauteil 108 erforderliche Anpresskraft an den Dichtlippen 132 bzw. 136 erzeugen zu können, umfasst die Dichtung 110 ferner ein Federelement 152, das in dem Aufnahmeraum 140 angeordnet ist.

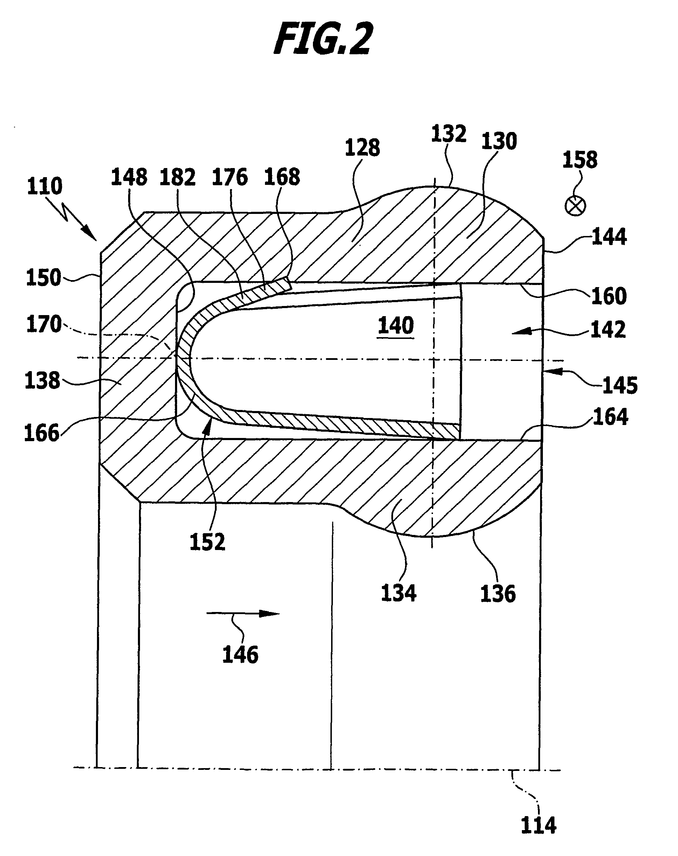

Wie am Besten aus den Fig. 1, 2 und 4 zu ersehen ist, umfasst das Federelement 152 einen beispielsweise mäanderförmigen Grundkörper 154 mit äußeren Umfangsrichtungsabschnitten 156, welche sich im montierten Zustand der Dichtung 110 im Wesentlichen längs einer Umfangsrichtung 158 des Dichtungskörpers 128 erstrecken und an einer äußeren Begrenzungswand 160 des Aufnahmeraums 140 an der (radial innen liegenden) Innenseite des ersten Dichtabschnitts 130 anliegen, und mit inneren Umfangsrichtungsabschnitten 162, welche sich im montierten Zustand der Dichtung 110 im Wesentlichen längs der Umfangsrichtung 158 des Dichtungskörpers 128 erstrecken und an einer inneren Begrenzungswand 164 des Aufnahmeraums 140 an der (radial außen liegenden) Außenseite des zweiten Dichtabschnitts 134 anliegen.

Jeweils in der Umfangsrichtung 158 aufeinanderfolgende äußere Umfangsrichtungsabschnitte 156 einerseits und innere Umfangsrichtungsabschnitte 162 des Federelements 152 andererseits sind miteinander durch Verbindungsstege 166 verbunden, welche in einem radialen Querschnitt im Wesentlichen U-förmig gebogen sind, wie dies am Besten aus den Fig. 1, 2 und 4 zu ersehen ist.

Das Federelement 152 weist eine Vielzahl von äußeren Umfangsrichtungsabschnitten 156 und inneren Umfangsrichtungsabschnitten 162, insbesondere jeweils mindestens zehn äußere Umfangsrichtungsabschnitte 156 und innere Umfangsrichtungsabschnitte 162, vorzugsweise jeweils mindestens zwanzig äußere Umfangsrichtungsabschnitte 156 und innere Umfangsrichtungsabschnitte 162, und eine entsprechende Anzahl von Verbindungsstegen 166 auf.

Um das Federelement 152 in einfacher und zuverlässiger Weise in dem Aufnahmeraum 140 des Dichtungskörpers 128 zurückzuhalten, ist das Federelement 152 mit mehreren, beispielsweise mit zwei oder mehr, vorzugsweise mit vier oder mehr, Krallenelementen 168 versehen, welche sich bei der Montage des Federelements 152 an dem Dichtungskörper 128 so mit dem Dichtungskörper 128 verkrallen, dass das Federelement 152 durch das Eingraben der Krallenelemente 168 in den Dichtungskörper 128 mit dem Dichtungskörper 128 verkrallt und somit an dem Dichtungskörper 128 festgelegt ist.

Wie am besten aus den Fig. 1, 2 und 4 zu ersehen ist, ist jedes der beispielsweise vier Krallenelemente 168 des Federelements 152 an jeweils einem der hinteren äußeren Umfangsrichtungsabschnitte 156a des Grundkörpers 154 des Federelements 152 angeordnet.

Dabei sind die hinteren äußeren Umfangsrichtungsabschnitte 156a, an denen die Krallenelemente 168 vorgesehen sind, näher an der Scheitellinie 170 des Federelements 152 angeordnet, um welche die Verbindungsstege 166 des Federelements 152 gebogen sind und längs welcher der Krümmungsradius des Federelements 152 am kleinsten ist, als die vorderen äußeren Umfangsrichtungsabschnitte 156b, welche im montierten Zustand der Dichtung 110 näher an der Mündungsöffnung 145 des Aufnahmeraums 140 angeordnet sind.

Dies wird dadurch erreicht, dass die Verbindungsstege 166a, welche die hinteren äußere Umfangsrichtungsabschnitte 156a mit den längs der Umfangsrichtung 158 benachbarten inneren Umfangsrichtungsabschnitten 162 verbinden, kürzer ausgebildet sind als bei den anderen, weiter von der Scheitellinie 170 entfernten vorderen äußeren Umfangsrichtungsabschnitten 156b des Federelements 152.

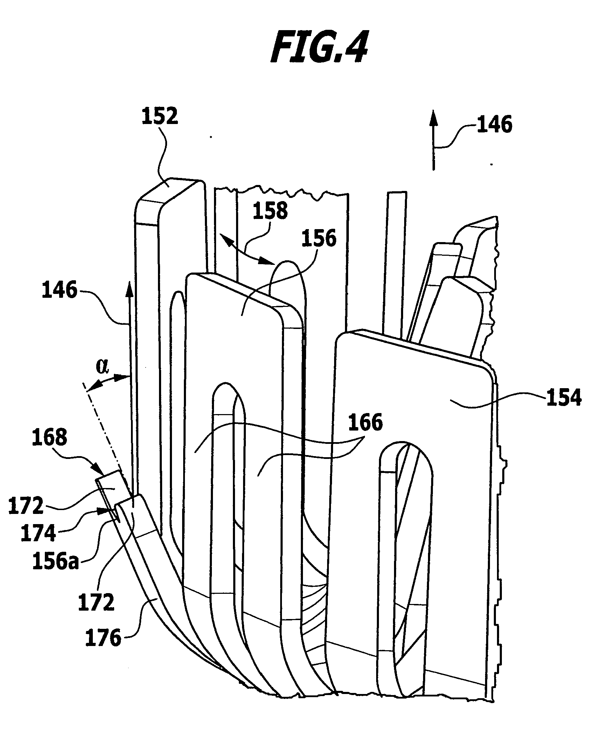

Wie beispielsweise aus Fig. 4 zu ersehen ist, kann das Krallenelement 168 zwei von einem äußeren Umfangsrichtungsabschnitt 156a abstehende Vorsprünge 172 umfassen, zwischen denen ein Zwischenraum 174 angeordnet ist.

Grundsätzlich könnten die Vorsprünge 172 aber auch ohne Zwischenraum unmittelbar nebeneinander angeordnet sein.

Ferner kann die Anzahl der Vorsprünge 172 pro Krallenelement 168 grundsätzlich beliebig variieren; so kann jedes Krallenelement 168 insbesondere auch nur einen einzigen Vorsprung 172 oder mehr als zwei Vorsprünge 172, beispielsweise drei Vorsprünge 172, umfassen.

Um das Krallenelement 168 gegen die Begrenzungswand 160 des Aufnahmeraums 140, in welche sich das Krallenelement 168 verkrallen soll, vorzuspannen, und das Eindringen des Krallenelements 168 in die betreffende Begrenzungswand 160 zu erleichtern, sind das Krallenelement 168, der hintere äußere Umfangsrichtungsabschnitt 156a des Federelements 152, an welchem das Krallenelement 168 angeordnet ist, und die im montierten Zustand der Dichtung 110 der äußeren Begrenzungswand 160 des Aufnahmeraums 140 zugewandten radial äußeren Abschnitte 176 der mit dem hinteren äußeren Umfangsrichtungsabschnitt 156a verbundenen Verbindungsstege 166 des Federelements 152 unter einem spitzen Winkel α gegenüber der Axialrichtung 146 des Federelements 152, welche im montierten Zustand der Dichtung 110 mit der Axialrichtung 146 der Dichtung 110 und der Baugruppe 100 übereinstimmt, geneigt (siehe Fig. 4).

Die Axialrichtung 146 weist vom Nutgrund 148 des Aufnahmeraums 140 zur Mündungsöffnung 145 hin.

Das Federelement 152 ist vorzugsweise aus einem elastischen metallischen Material, insbesondere aus einem Federstahlmaterial, gebildet.

Ferner ist das Material des Federelements 152 vorzugsweise ein Edelstahlmaterial, da ein solches Material insbesondere für den Einsatz in aggressiven Medien geeignet ist.

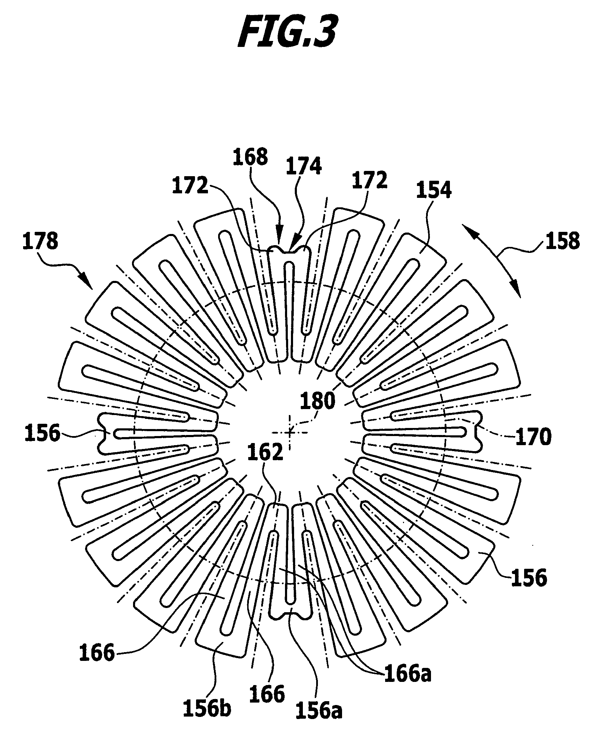

Das Federelement 152 wird durch Umformen einer in Fig. 3 in der Draufsicht dargestellten Federelement-Vorform 178 hergestellt.

Die Federelement-Vorform 178 wird durch Heraustrennen der Federelement-Vorform 178 mit der gezeigten Kontur aus einer Platine des Ausgangsmaterials, insbesondere eines Stahlblechs, erhalten.

In der zunächst im Wesentlichen ebenen Federelement-Vorform 178 sind die Verbindungsstege 166 im Wesentlichen radial zu einem Zentrum 180 der Federelement-Vorform 178 ausgerichtet, während die äußeren Umfangsrichtungsabschnitte 156a, 156b und die inneren Umfangsrichtungsabschnitte 162 des Federelements 152 in der Federelement-Vorform 178 längs der Umfangsrichtung 158 ausgerichtet sind.

Die Scheitellinie 170 des Federelements 152 verläuft in der Federelement-Vorform 178 kreisförmig um das Zentrum 180 und im Wesentlichen mittig zwischen den äußeren Umfangsrichtungsabschnitten 156 und den inneren Umfangsrichtungsabschnitten 162.

Aus der in Fig. 3 dargestellten Federelement-Vorform 178 wird das Federelement 152 der Dichtung 110 erzeugt, indem die Verbindungsstege 166 so um die Scheitellinie 170 gebogen werden, dass die äußeren Umfangsrichtungsabschnitte 156 und die inneren Umfangsrichtungsabschnitte 162 im Wesentlichen parallel zur Axialrichtung 146 oder unter einem kleinen spitzen Winkel gegenüber der Axialrichtung 146 geneigt ausgerichtet sind, wobei die hinteren äußeren Umfangsrichtungsabschnitte 156a, an denen die Krallenelemente 168 angeordnet sind, unter einem Winkel α (beispielsweise im Bereich von ungefähr 20° bis ungefähr 40°) gegenüber der Axialrichtung 146 geneigt sind (siehe Fig. 4).

Nach diesem Umformvorgang wird das Federelement 152 in den Aufnahmeraum 140 des Dichtungskörpers 128 eingebracht, insbesondere eingepresst, wobei sich das Federelement 152 durch die nach außen weisenden äußeren Abschnitte 176 der Verbindungsstege 166a, welche abgespreizte Stege 182 des Federelements 152 bilden, automatisch in dem ringförmigen Aufnahmeraum 140 zentriert wird.

Die an den abgespreizten Stegen 182 angeordneten Krallenelemente 168 graben sich mit ihren Vorsprüngen 172 in die äußere Begrenzungswand 160 des Aufnahmeraums 140 ein, so dass das Federelement 152 mittels der Krallenelemente 168 derart mit dem Dichtungskörper 128 verkrallt ist, dass sich das Federelement 152 nicht mehr von dem Dichtungskörper 128 lösen und nicht mehr aus dem Aufnahmeraum 140 herausgelangen kann.

Um die Selbstzentrierung des Federelements 152 im Aufnahmeraum 140 und die Verkrallung des Federelements 152 mit dem Dichtungskörper 128 zu fördern, weist das Federelement 152 mehrere Krallenelemente 168, insbesondere drei Krallenelemente 168 oder mehr, vorzugsweise vier Krallenelemente 168 oder mehr, auf, wobei die Krallenelemente 168 vorzugsweise im Wesentlichen äquidistant längs der Umfangsrichtung 158 des Federelements 152 verteilt sind (siehe insbesondere Fig. 3).

Da das Federelement 152 durch die Verkrallung mittels der Krallenelemente 168 in dem Aufnahmeraum 140 des Dichtungskörpers 128 gehalten ist, ist es nicht erforderlich, im Bereich des Aufnahmeraums 140 an dem Dichtungskörper 128 eine Rückhaltenase oder eine andere Hinterschneidung zum Zurückhalten des Federelements 152 in dem Aufnahmeraum 140 vorzusehen.

Durch den Wegfall der Rückhaltenase an dem Dichtungskörper 128 entfällt auch die Gefahr, dass bei der Montage des Federelements 152 im Aufnahmeraum 140 des Dichtungskörpers 128 eine solche Rückhaltenase beschädigt wird und dabei Fusseln und/oder Grate entstehen könnten, welche die Funktionsfähigkeit der Baugruppe 100 beeinträchtigen können.

Ferner entfällt durch den Wegfall der Rückhaltenase an dem Dichtungskörper 128 auch die Notwendigkeit, bei der Herstellung des Dichtungskörpers 128 einen separaten Drehvorgang mit einem filigranen Drehwerkzeug durchzuführen.

Der Dichtungskörper 128 kann daher insbesondere aus einem hoch gefüllten, schwer zerspanbaren PTFE-Compound gebildet sein.

Durch den Wegfall der Rückhaltenase an dem Dichtungskörper 128 kann der Dichtungskörper 128 auch in einfacher Weise in einem Spritzgießverfahren hergestellt werden, da der fertige Dichtungskörper 128 ohne Rückhaltenase leicht aus dem Spritzwerkzeug entformt werden kann.

Insbesondere kann der Dichtungskörper 128 daher durch Spritzgießen aus einem schmelzverarbeitbaren TFE-Copolymer oder aus einem Compound eines schmelzverarbeitbaren TFE-Copolymers hergestellt werden.

Ferner entfällt dadurch, dass das Federelement 152 mittels der Krallenelemente 168 auch ohne Rückhaltenase sicher an dem Dichtungskörper 128 gehalten ist, die Gefahr, dass sich das Federelement 152 im Betrieb der Dichtung 110 relativ zu dem Dichtungskörper 128 verschiebt oder sich gar aus dem Aufnahmeraum 140 herausbewegt.

Durch die exakte und dauerhafte Positionierung des Federelements 152 im Aufnahmeraum 140 des Dichtungskörpers 128 mittels der Krallenelemente 168 wird ferner erreicht, dass das Federelement 152 eine längs der Umfangsrichtung besonders konstante elastische Vorspannkraft auf den ersten Dichtabschnitt 130 mit der ersten Dichtlippe 132 und auf den zweiten Dichtabschnitt 134 mit der zweiten Dichtlippe 136 ausübt, so dass besonders konstante Dichtlippenpressungen und somit eine besonders hohe Fluid-Dichtheit der Dichtung 110 erzielt werden.

Bei der Montage der Baugruppe 100 wird die Dichtung 110 mit dem in den Aufnahmeraum 140 des Dichtungskörpers 128 eingesetzten Federelement 152 zwischen dem ersten Bauteil 102 und dem zweiten Bauteil 108 angeordnet.

Dabei liegt der Dichtungskörper 128 der Dichtung 110 unter Verformung des ersten Dichtabschnitts 130 mit der ersten Dichtlippe 132 an einer Dichtfläche 184 des ersten Bauteils 102, insbesondere an einer radial inneren Umfangsfläche des Dichtungshalters 106, und unter Verformung des zweiten Dichtabschnitts 134 mit der zweiten Dichtlippe 136 an einer Dichtfläche 186 des zweiten Bauteils 108, insbesondere an der Umfangsfläche des zylindrischen zweiten Bauteils 108, an (diese Verformung des ersten Dichtabschnitts 130 und des zweiten Dichtabschnitts 134 ist in der schematischen Darstellung von Fig. 1 nicht berücksichtigt, weshalb sich in dieser schematischen Darstellung die erste Dichtlippe 132 und das erste Bauteil 102 sowie die zweite Dichtlippe 136 und das zweite Bauteil 108 überlappen).

Im montierten Zustand der Baugruppe 100 weist somit der erste Dichtabschnitt 130 im Wesentlichen den Außenradius R und der zweite Dichtabschnitt 134 den Innenradius r auf.

Ferner liegt der Dichtungskörper 128 im montierten Zustand vorzugsweise mit seiner geschlossenen Stirnfläche 150 an der Stirnfläche 124 des Basisteils 104 des ersten Bauteils 102 an.

Durch die Abdichtung an der ersten Dichtlippe 132 und der zweiten Dichtlippe 136 trennt die Dichtung 110 im montierten Zustand der Baugruppe 100 einen ersten Medienraum 188 und einen zweiten Medienraum 190 im Wesentlichen fluiddicht voneinander.

Die Medienräume 188 und 190 können daher im Betrieb der Baugruppe 100 mit unterschiedlichen fluiden Medien, beispielsweise mit Luft, Kraftstoff oder Öl, gefüllt sein.

Das zweite Bauteil 108 ist im Betrieb der Baugruppe 100 vorzugsweise relativ zu dem ersten Bauteil 102 beweglich.

Dabei kann das zweite Bauteil 108 relativ zu dem ersten Bauteil 102 um die Längsachse 114 drehbar und/oder längs der Längsachse 114, das heißt in der Axialrichtung 146 oder entgegen der Axialrichtung 146, verschiebbar sein.

Dabei bleibt die Dichtung 110 vorzugsweise ortsfest in Bezug auf das erste Bauteil 102.

Grundsätzlich kann aber auch vorgesehen sein, dass die Dichtung 110 so mit dem zweiten Bauteil 108 verbunden ist, dass sie sich zusammen mit dem zweiten Bauteil 108 relativ zu dem ersten Bauteil 102 bewegt.

Wenn die Dichtung 110 bezüglich des ersten Bauteils 102 ortsfest angeordnet ist, ist der am ersten Bauteil 102 anliegende erste Dichtabschnitt 130 der Dichtung 110 ein statischer Dichtabschnitt, während der an dem zweiten Bauteil 108 anliegende zweite Dichtabschnitt 134 der Dichtung 110 ein dynamischer Dichtabschnitt ist.

Beispielsweise kann der erste Medienraum 188 mit einem Motoröl und der zweite Medienraum 190 mit einer anderen Flüssigkeit, beispielsweise mit Kraftstoff, insbesondere Benzin, gefüllt sein.

Die Baugruppe 100 kann einen Bestandteil einer Hochdruckpumpe, insbesondere einer Hochdruckpumpe zum Einspritzen eines Kraftstoffs in einen Verbrennungsmotor, bilden.

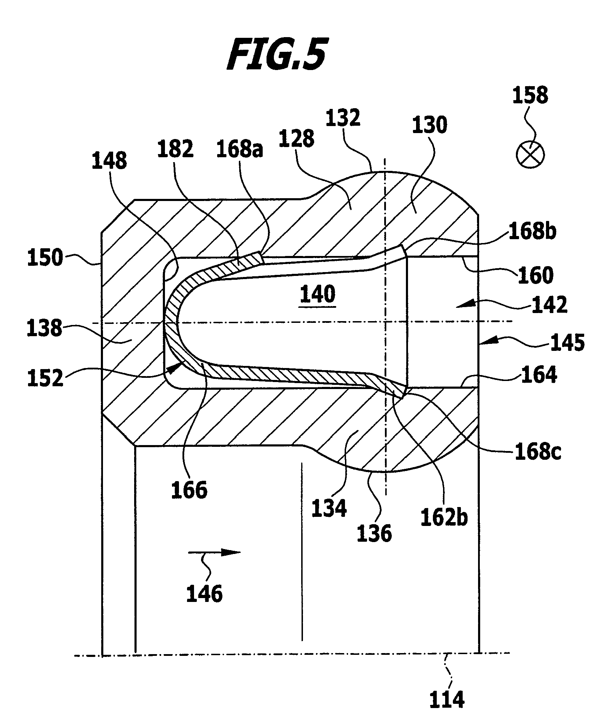

Eine in den Fig. 5 bis 7 dargestellte zweite Ausführungsform einer Dichtung 110 unterscheidet sich von der in den Fig. 1 bis 4 dargestellten ersten Ausführungsform dadurch, dass Krallenelemente 168 nicht nur an einzelnen äußeren Umfangsrichtungsabschnitten 156 des Federelements 152 vorgesehen sind, sondern auch an inneren Umfangsrichtungsabschnitten 162 des Federelements 152.

Ferner sind Krallenelemente 168 an äußeren Umfangsrichtungsabschnitten 156a und 156b vorgesehen, welche mit unterschiedlich langen Verbindungsstegen 166 verbunden sind, so dass sich diese verschiedenen äußeren Umfangsrichtungsabschnitte 156 an unterschiedlichen Axialpositionen des Federelements 152 (das heißt an unterschiedlichen Positionen bezüglich der Axialrichtung 146 des Federelements 152) befinden.

Im folgenden werden die an den hinteren äußeren Umfangsrichtungsabschnitten 156a angeordneten Krallenelemente als Krallenelemente 168a, die an den vorderen äußeren Umfangsrichtungsabschnitten 156b angeordneten Krallenelemente als Krallenelemente 168b und die an vorderen inneren Umfangsrichtungsabschnitten 162b angeordneten Krallenelemente als Krallenelemente 168c bezeichnet.

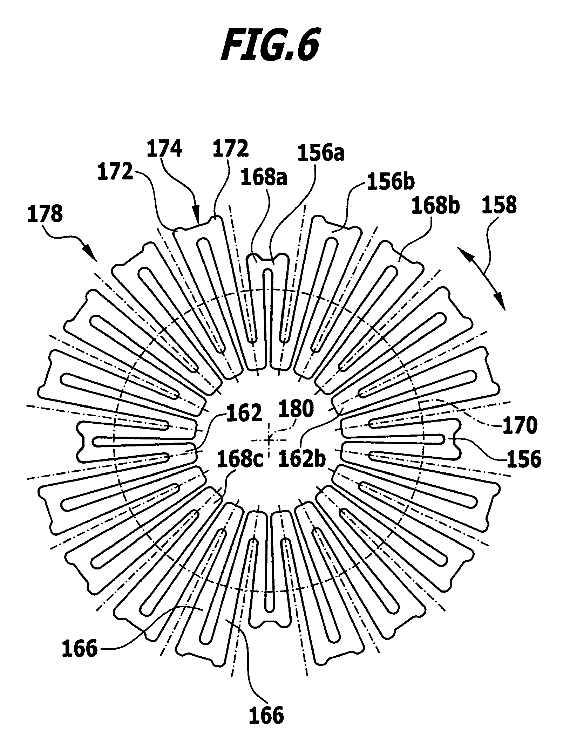

Wie am besten aus Fig. 6 zu ersehen ist, kann insbesondere vorgesehen sein, dass alle hinteren äußeren Umfangsrichtungsabschnitte 156a und alle vorderen äußeren Umfangsrichtungsabschnitte 156b und alle inneren Umfangsrichtungsabschnitte 162 mit jeweils einem Krallenelement 168 versehen sind.

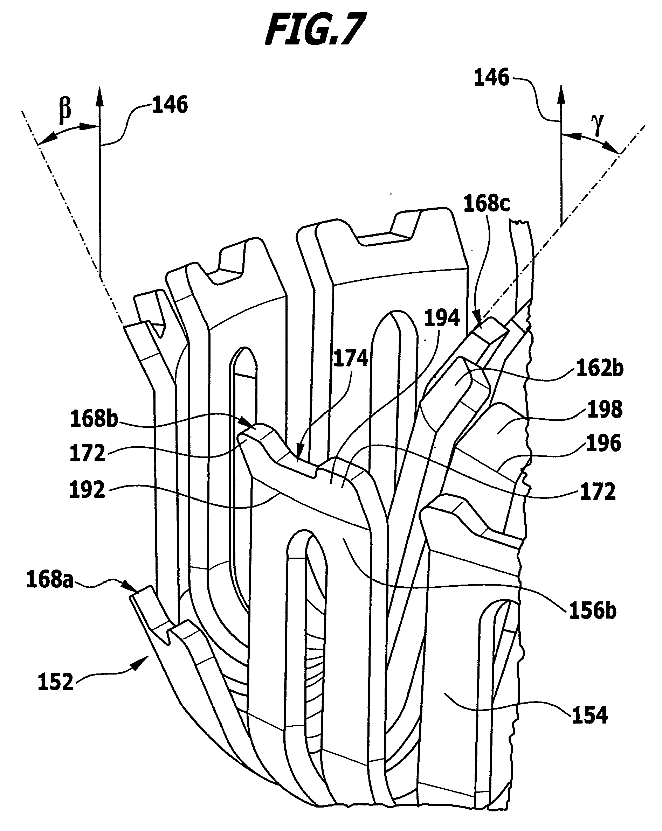

Wie am besten aus Fig. 7 zu ersehen ist, sind die Krallenelemente 168a an den hinteren äußeren Umfangsrichtungsabschnitten 156a genauso ausgebildet wie bei der in den Fig. 1 bis 4 dargestellten ersten Ausführungsform.

Die Krallenelemente 168b an den vorderen äußeren Umfangsrichtungsabschnitten 156b sind jeweils als ein um eine Knicklinie 192 nach außen abgeknickter Abschnitt 194 des jeweiligen vorderen äußeren Umfangsrichtungsabschnitts 156b ausgebildet, wobei der jeweilige nach außen abgeknickte Abschnitt 194 gegenüber der Axialrichtung 146 des Federelements 152 um einen spitzen Winkel β, beispielsweise im Bereich von ungefähr 20° bis ungefähr 40°, geneigt ist.

Jedes dieser Krallenelemente 168b kann mehrere, beispielsweise zwei, von dem nach außen abgeknickten Abschnitt 194 vorstehende Vorsprünge 172 und jeweils einen dazwischen angeordneten Zwischenraum 174 umfassen.

Die an den inneren Umfangsrichtungsabschnitten 162 angeordneten Krallenelemente 168c sind bei dieser Ausführungsform als um jeweils eine Knicklinie 196 nach innen, das heißt zu der Längsachse 114 des Federelements 152 hin, abgeknickte Abschnitte 198 ausgebildet.

Diese nach innen abgeknickten Abschnitte 198 sind gegenüber der Axialrichtung 146 des Federelements 152 um einen spitzen Winkel γ, beispielsweise im Bereich von ungefähr 20° bis ungefähr 40°, geneigt.

Die Krallenelemente 168c an den inneren Umfangsrichtungsabschnitten 162 können, wie in Fig. 7 gezeigt, nur die nach innen abgeknickten Abschnitte 198 der inneren Umfangsrichtungsabschnitte 162 umfassen oder, ebenso wie die Krallenelemente 168a und 168b an den äußeren Umfangsrichtungsabschnitten 156a bzw. 156b, einen oder mehrere von dem jeweiligen nach innen abgeknickten Abschnitt 198 vorspringende Vorsprünge 172 umfassen.

Das Federelement 152 der zweiten Ausführungsform der Dichtung 110 wird aus der in Fig. 6 dargestellten Federelement-Vorform 178 durch Umformen der Verbindungsstege 166 und durch Umknicken der nach außen abgeknickten Abschnitte 194 der vorderen äußeren Umfangsrichtungsabschnitte 156 um die Knicklinien 192 und durch Abknicken der nach innen abgeknickten Abschnitte 198 der inneren Umfangsrichtungsabschnitte 162 um die Knicklinien 196 hergestellt.

Nach diesen Umformungsvorgängen wird das Federelement 152 in den Aufnahmeraum 140 des Dichtungskörpers 128 eingebracht, wo sich das Federelement 152 mittels der Krallenelemente 168a und 168b an den äußeren Umfangsrichtungsabschnitten 156a und 156b mit der äußeren Begrenzungswand 160 des Aufnahmeraums 140 verkrallt und mittels der Krallenelemente 168c an den inneren Umfangsrichtungsabschnitten 162 mit der inneren Begrenzungswand 164 des Aufnahmeraums 140 verkrallt.

Durch die Verkrallung des Federelements 152 mittels Krallenelementen 168 an beiden einander gegenüberliegenden Begrenzungswänden 160 und 164 des Aufnahmeraums 140 und durch die Verkrallung des Federelements 152 mittels Krallenelementen 168, die an unterschiedlichen Axialpositionen des Federelements 152 und somit in unterschiedlichen Abständen von der Mündungsöffnung 145 des Aufnahmeraums 140 und in unterschiedlichen Abständen von dem Nutgrund 148 des Aufnahmeraums 140 angeordnet sind, werden ein besonders sicherer Halt des Federelements 152 an dem Dichtungskörper 128 sowie eine besonders zuverlässige Zentrierung des Federelements 152 an dem Dichtungskörper 128 erzielt.

Dabei ist der Anteil der hinteren äußeren Umfangsrichtungsabschnitte 156a an der Gesamtzahl der äußeren Umfangsrichtungsabschnitte 156 grundsätzlich beliebig wählbar.

Bei dem in Fig. 6 dargestellten Ausführungsbeispiel beträgt die Anzahl der hinteren äußeren Umfangsrichtungsabschnitte 156a beispielsweise vier und ist die Anzahl der hinteren äußeren Umfangsrichtungsabschnitte 156a kleiner als die Anzahl der vorderen äußeren Umfangsrichtungsabschnitte 156b.

Grundsätzlich kann aber auch die Anzahl der hinteren äußeren Umfangsrichtungsabschnitte 156a größer sein als die Anzahl der vorderen äußeren Umfangsrichtungsabschnitte 156b.

Im Übrigen stimmt die in den Fig. 5 bis 7 dargestellte zweite Ausführungsform einer Dichtung 110 hinsichtlich Aufbau, Funktionsweise und Herstellungsweise mit der in den Fig. 1 bis 4 dargestellten ersten Ausführungsform überein, auf deren vorstehende Beschreibung insoweit Bezug genommen wird.

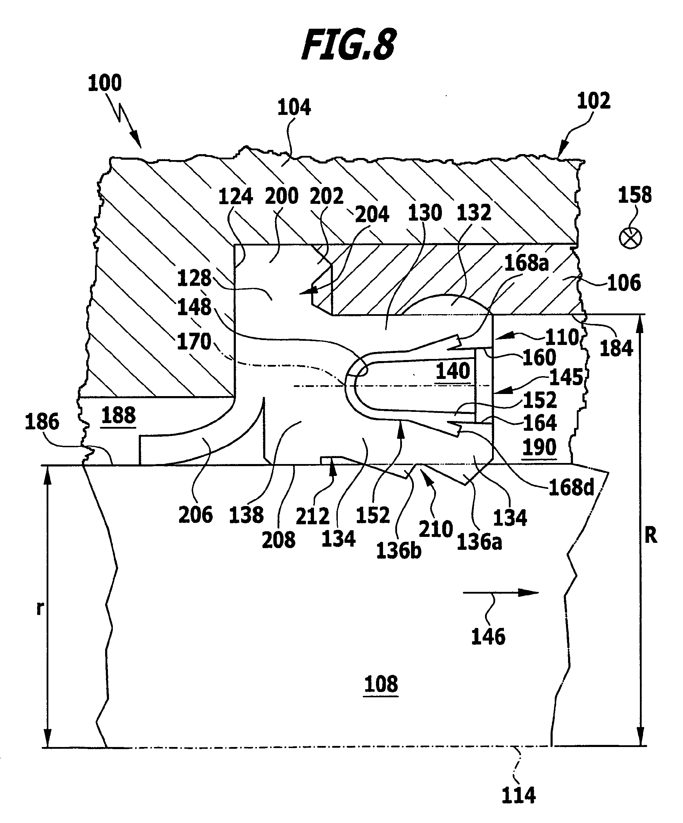

Eine in Fig. 8 dargestellte alternative Ausführungsform einer Baugruppe 100 mit einer dritten Ausführungsform der Dichtung 110 unterscheidet sich von der in den Fig. 1 bis 4 dargestellten ersten Ausführungsform dadurch, dass der Dichtungsköper 128 bei der dritten Ausführungsform zusätzlich zu dem ersten Dichtabschnitt 130, dem zweiten Dichtabschnitt 134 und dem Steg 138 einen radial außerhalb des ersten Dichtabschnitts 130 angeordneten Halteabschnitt 200 umfasst, welcher einen in der Axialrichtung 146 vorstehenden Vorsprung 202 umfasst. Dieser Vorsprung ist im montierten Zustand der Dichtung 110 in einem Zwischenraum zwischen dem Dichtungshalter 106 und der Stirnfläche 124 des Basisteils 104 angeordnet und wird axial gegen den Dichtungshalter 106 gequetscht, so dass eine erhöhte Dichtpressung erzielt wird (diese Quetschung ist in der schematischen Darstellung von Fig. 8 nicht wiedergegeben). Hierdurch ist der Dichtungskörper 128 als Ganzes gegen eine Verschiebung relativ zu dem ersten Bauteil 102 in der Radialrichtung 126 gesichert.

Ferner ist bei dieser Ausführungsform der Dichtung 110 der Dichtungskörper 128 mit einer zusätzlichen Abstreiflippe 206 versehen, welche im montierten Zustand der Dichtung 110 an der Dichtfläche 186 des zweiten Bauteils 108, also insbesondere an der Umfangsfläche eines zylindrischen zweiten Bauteils 108, anliegt.

Durch diese zusätzliche Abstreiflippe 206 werden Schmutzpartikel aus dem ersten Medienraum 188 von dem zweiten Dichtabschnitt 134 fern gehalten.

Die Abstreiflippe 206 kann insbesondere als eine Memory-Abstreiflippe ausgebildet sein, das heißt als eine Abstreiflippe, die durch einen Memory-Effekt des verwendeten Flourpolymer-Materials, insbesondere eines PTFE- oder PTFE-Compound-Materials, eines schmelzverarbeitbaren TFE-Copolymers oder eines Compounds eines schmelzverarbeitbaren TFE-Copolymers, gegen die zugeordnete Dichtfläche 186 vorgespannt ist.

Dieser Memory-Effekt kommt dadurch zustande, dass die Memory-Abstreiflippe zunächst durch spanende Bearbeitung mit einem Innendurchmesser hergestellt wird, welcher kleiner ist als der Außendurchmesser des zweiten Bauteils 108, und die Memory-Abstreiflippe anschließend, bei Raumtemperatur oder bei erhöhter Temperatur, so verformt wird, dass das zweite Bauteil 108 durch die Abstreiflippe 206 hindurchgeführt werden kann. Bei einer Erwärmung der Baugruppe 100 im Betrieb derselben verformt sich der PTFEhaltige Werkstoff der Memory-Abstreiflippe in Richtung seiner ursprünglichen Gestalt zurück. Durch diesen sogenannten "Plastic-Memory-Effekt" ist die Abstreiflippe 206 somit gegen die Dichtfläche 186 vorgespannt und wird im Zuge des Verschleißes der Abstreiflippe 206 während des Betriebes der Baugruppe 100 kontinuierlich gegen das zweite Bauteil 108 nachgestellt, so dass stets eine hinreichende Abstreifwirkung der Abstreiflippe 206 gewährleistet ist.

Ferner weist bei der in Fig. 8 dargestellten Ausführungsform der Dichtung 110 der zweite Dichtabschnitt 134 nicht nur eine einzige Dichtlippe auf, sondern mehrere, beispielsweise zwei oder drei, in der Axialrichtung 146 aufeinanderfolgende zweite Dichtlippen 136a und 136b sowie eine im montierten Zustand der Baugruppe 100 an der Dichtfläche 186 des zweiten Bauteils 108 anliegende, im Wesentlichen zylindrische Anlagefläche 208.

Zwischen der vorderen zweiten Dichtlippe 136a und der hinteren zweiten Dichtlippe 136b ist ein erster Leckage-Speicherraum 210 ausgebildet, und zwischen der hinteren zweiten Dichtlippe 136 und der Anlagefläche 208 des zweiten Dichtabschnitts 134 ist ein zweiter Leckage-Speicherraum 212 ausgebildet.

Im montierten Zustand der Dichtung 110 liegen die vordere zweite Dichtlippe 136a, die hintere zweite Dichtlippe 136b und die Anlagefläche 208 des zweiten Dichtabschnitts 134 an der Dichtfläche 186 des zweiten Bauteils 108 an. Durch diese dreifache oder (bei Verwendung von drei zweiten Dichtlippen) vierfache Abdichtung wird die Leckage des Mediums aus dem zweiten Medienraum 190 in den ersten Medienraum 188 deutlich reduziert.

Wenn das zweite Bauteil 108 sich im Betrieb der Baugruppe 100 relativ zu der Dichtung 110 entgegen der Axialrichtung 146 bewegt, wird Leckage-Flüssigkeit aus dem zweiten Medienraum 190 in den Leckage-Speicherräumen 210 und 212 des zweiten Dichtabschnitts 134 gespeichert und bei der Zurückbewegung des zweiten Bauteils 108 in der Axialrichtung 146, insbesondere beim Rückhub eines an dem zweiten Bauteil 108 angeordneten Kolbens, wieder in den zweiten Medienraum 190 zurückgeschleppt.

Das Federelement 152 der Dichtung 110 weist bei dieser Ausführungsform, ebenso wie bei den in den Fig. 1 bis 7 dargestellten Ausführungsformen, an hinteren äußeren Umfangsrichtungsabschnitten 156a angeordnete hintere äußere Krallenelemente 168a auf, mittels welcher das Federelement 152 mit der äußeren Begrenzungswand 160 des Aufnahmeraums 140 des Dichtungskörpers 128 verkrallt ist.

Ergänzend hierzu weist das Federelement 152 bei dieser dritten Ausführungsform hintere innere Krallenelemente 168d auf, welche an hinteren inneren Umfangsrichtungsabschnitten 162a des Federelements 152 angeordnet sind und mit der inneren Begrenzungswand 164 des Aufnahmeraums 140 verkrallt sind.

Wie aus Fig. 8 zu ersehen ist, sind die hinteren äußeren Krallenelemente 168a und die hinteren inneren Krallenelemente 168d im Wesentlichen an derselben Axialposition des Federelements 152, das heißt an derselben Position längs der Axialrichtung 146, angeordnet.

Der Nutgrund 148 des Aufnahmeraums 140 kann bei dieser Ausführungsform gekrümmt ausgebildet und insbesondere an die Krümmung des Federelements 152 im Bereich der Scheitellinie 170 angepasst sein.

Im Übrigen stimmt die in Fig. 8 dargestellte dritte Ausführungsform der Dichtung 110 hinsichtlich Aufbau, Funktionsweise und Herstellungsweise mit den in den Fig. 1 bis 7 dargestellten Ausführungsformen überein, auf deren vorstehende Beschreibung insoweit Bezug genommen wird.

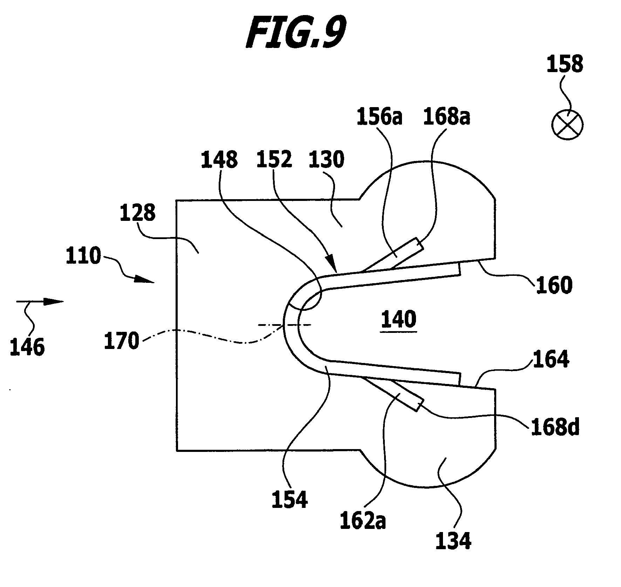

Eine in Fig. 9 dargestellte vierte Ausführungsform der Dichtung 110 unterscheidet sich von der in den Fig. 1 bis 4 dargestellten ersten Ausführungsform dadurch, dass das Federelement 152 der Dichtung 110 nicht nur mindestens ein hinteres äußeres Krallenelement 168a aufweist, das an einem hinteren äußeren Umfangsrichtungsabschnitt 156a des Federelements 152 angeordnet und mit der äußeren Begrenzungswand 160 des Aufnahmeraums 140 des Dichtungskörpers 128 verkrallt ist, sondern zusätzlich auch mindestens ein hinteres inneres Krallenelement 168d, das an einem hinteren inneren Umfangsrichtungsabschnitt 162a angeordnet und mit der inneren Begrenzungswand 164 des Aufnahmeraums 140 des Dichtungskörpers 128 verkrallt ist.

Im Übrigen stimmt die in Fig. 9 dargestellte vierte Ausführungsform der Dichtung 110 hinsichtlich Aufbau, Funktionsweise und Herstellungsweise mit der in den Fig. 1 bis 4 dargestellten ersten Ausführungsform überein, auf deren vorstehende Beschreibung insoweit Bezug genommen wird.

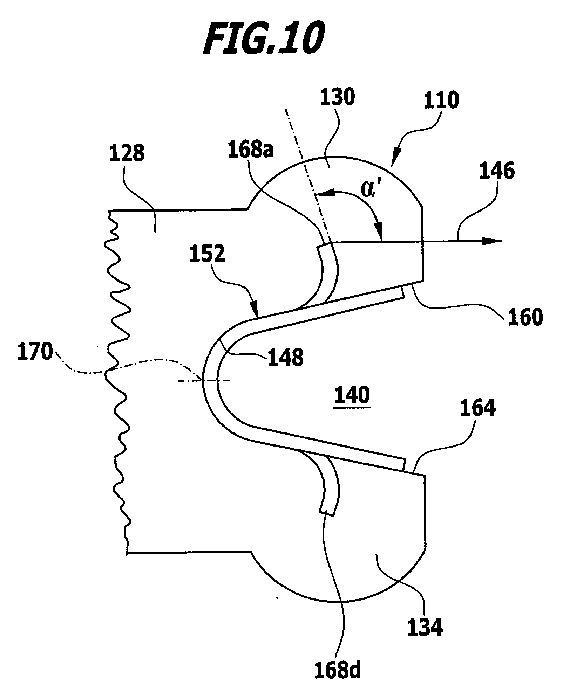

Eine in Fig. 10 dargestellte fünfte Ausführungsform der Dichtung 110 unterscheidet sich von der in Fig. 9 dargestellten vierten Ausführungsform dadurch, dass die Krallenelemente 168a und 168d bei dieser Ausführungsform so weit gegenüber der Axialrichtung 146 des Federelements 152 zurückgebogen sind, dass die Krallenelemente 168a und 168d mit der Axialrichtung 146 keinen spitzen Winkel α, sondern einen rechten Winkel oder einen stumpfen Winkel α' einschließen (siehe Fig. 10).

Hierdurch wird ein besonders sicherer Halt des Federelements 152 in dem Aufnahmeraum 140 des Dichtungskörpers 128 erzielt.

Im Übrigen stimmt die in Fig. 10 dargestellte fünfte Ausführungsform der Dichtung 110 hinsichtlich Aufbau, Funktionsweise und Herstellungsweise mit der in Fig. 9 dargestellten vierten Ausführungsform überein, auf deren vorstehende Beschreibung insoweit Bezug genommen wird.

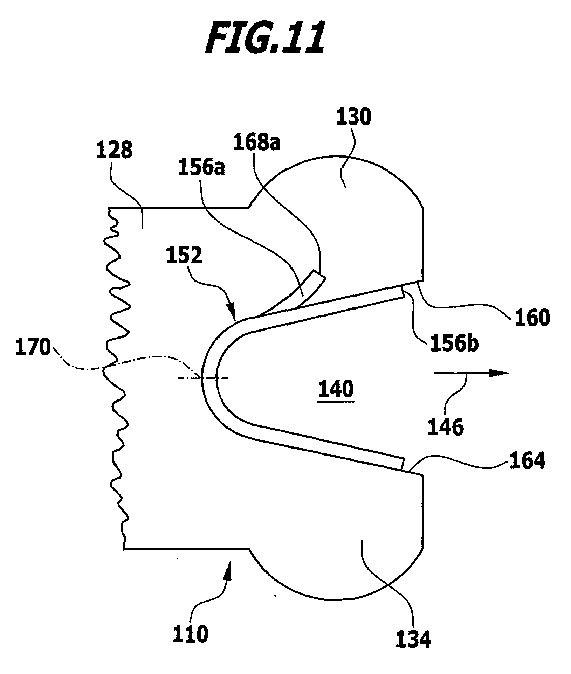

Eine in Fig. 11 dargestellte sechste Ausführungsform der Dichtung 110 unterscheidet sich von der in den Fig. 1 bis 4 dargestellten ersten Ausführungsform im Wesentlichen nur dadurch, dass die hinteren äußeren Krallenelemente 168a näher an den vorderen Kanten der vorderen äußeren Umfangsrichtungsabschnitte 156b des Federelements 152 angeordnet sind.

Ferner kann der Nutgrund 148 des Dichtungskörpers 128 bei dieser Ausführungsform (wie auch bei den Ausführungsformen gemäß den Fig. 9 und 10) gekrümmt ausgebildet sein und insbesondere an die Krümmung des Federelements 152 im Bereich der Scheitellinie 170 des Federelements 152 angepasst sein.

Im Übrigen stimmt die in Fig. 11 dargestellte sechste Ausführungsform der Dichtung 110 hinsichtlich Aufbau, Funktionsweise und Herstellungsweise mit der in den Fig. 1 bis 4 dargestellten ersten Ausführungsform überein, auf deren vorstehende Beschreibung insoweit Bezug genommen wird.

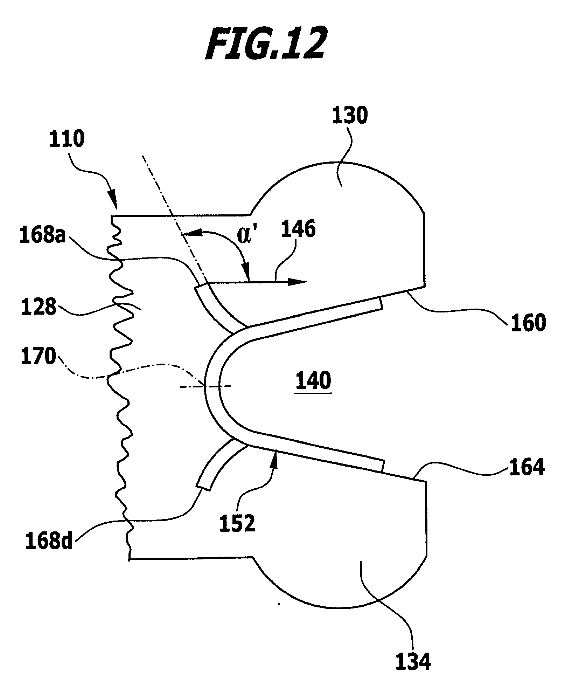

Eine in Fig. 12 dargestellte siebte Ausführungsform der Dichtung 110 unterscheidet sich von der in Fig. 10 dargestellten fünften Ausführungsform dadurch, dass die hinteren äußeren Krallenelemente 168a und die hinteren inneren Krallenelemente 168d an dem Federelement 152 so weit hinten angeordnet sind, dass die Enden dieser Krallenelemente 168a, 168d in der Axialrichtung 146 hinter der Scheitellinie 170 des Federelements 152 liegen. Hierdurch ist es für die Krallenelemente 168a, 168d besonders einfach, sich in die äußere Begrenzungswand 160 bzw. in die innere Begrenzungswand 164 des Aufnahmeraums 140 des Dichtungskörpers 128 einzugraben und dort festzukrallen.

Im Übrigen stimmt die in Fig. 12 dargestellte siebte Ausführungsform der Dichtung 110 hinsichtlich Aufbau, Funktionsweise und Herstellungsweise mit der in Fig. 10 dargestellten fünften Ausführungsform überein, auf deren vorstehende Beschreibung insoweit Bezug genommen wird.

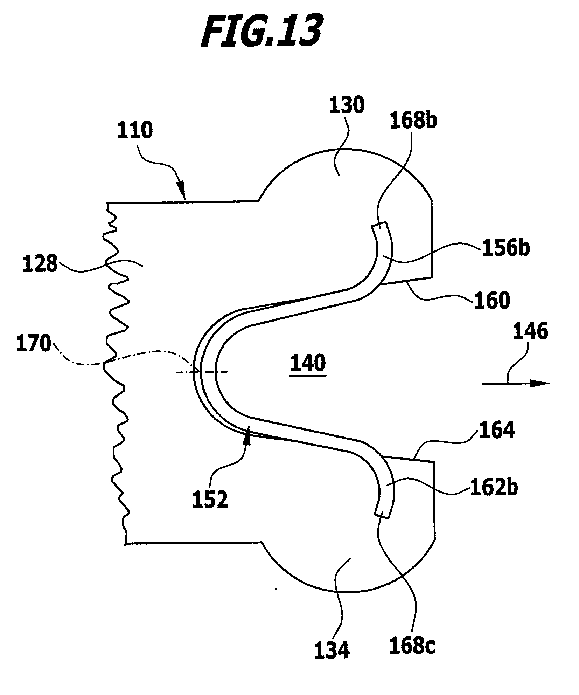

Eine in Fig. 13 dargestellte achte Ausführungsform der Dichtung 110 unterscheidet sich von der in Fig. 10 dargestellten fünften Ausführungsform dadurch, dass das Federelement 152 anstelle der hinteren äußeren Krallenelemente 168a und der hinteren inneren Krallenelemente 168d vordere äußere Krallenelemente 168b aufweist, die an vorderen äußeren Umfangsrichtungsabschnitten 156b des Federelements angeordnet sind und mit der äußeren Begrenzungswand 160 des Aufnahmeraums 140 des Dichtungskörpers 128 verkrallt sind, und vordere innere Krallenelemente 168c aufweist, die an vorderen inneren Umfangsrichtungsabschnitten 162b des Federelements 152 angeordnet sind und mit der inneren Begrenzungswand 164 des Aufnahmeraums 140 des Dichtungskörpers 128 verkrallt sind.

Im Übrigen stimmt die in Fig. 13 dargestellte achte Ausführungsform der Dichtung 110 hinsichtlich Aufbau, Funktionsweise und Herstellungsweise mit der in Fig. 10 dargestellten fünften Ausführungsform überein, auf deren vorstehende Beschreibung insoweit Bezug genommen wird.

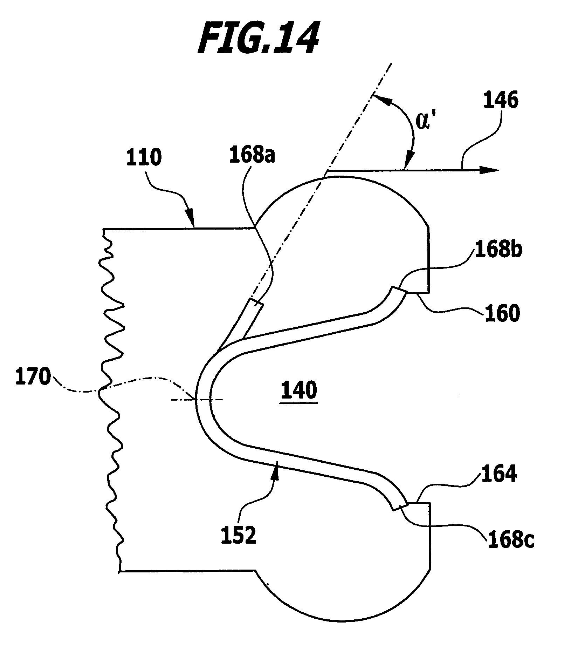

Eine in Fig. 14 dargestellte neunte Ausführungsform der Dichtung 110 unterscheidet sich von der in den Fig. 5 bis 7 dargestellten zweiten Ausführungsform lediglich dadurch, dass die Krallenelemente 168a, 168b und 168c bei der neunten Ausführungsform einen größeren Winkel α mit der Axialrichtung 146 des Federelements 152 einschließen als bei der zweiten Ausführungsform. Ferner kann der Nutgrund 148 des Aufnahmeraums 140 bei der neunten Ausführungsform, ebenso wie bei der in Fig. 12 dargestellten siebten Ausführungsform und bei der in Fig. 13 dargestellten achten Ausführungsform, gekrümmt ausgebildet und insbesondere an die Krümmung des Federelements 152 im Bereich der Scheitellinie 170 angepasst sein.

Im Übrigen stimmt die in Fig. 14 dargestellte neunte Ausführungsform der Dichtung 110 hinsichtlich Aufbau, Funktionsweise und Herstellungsweise mit der in den Fig. 5 bis 7 dargestellten zweiten Ausführungsform überein, auf deren vorstehende Beschreibung insoweit Bezug genommen wird.

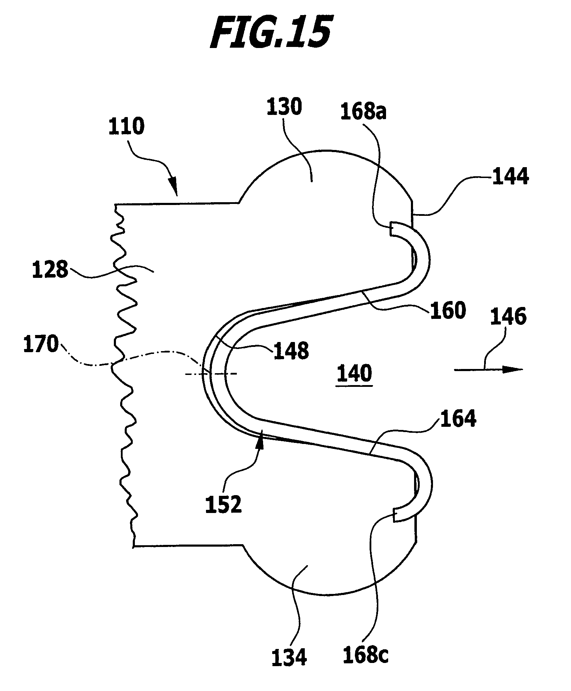

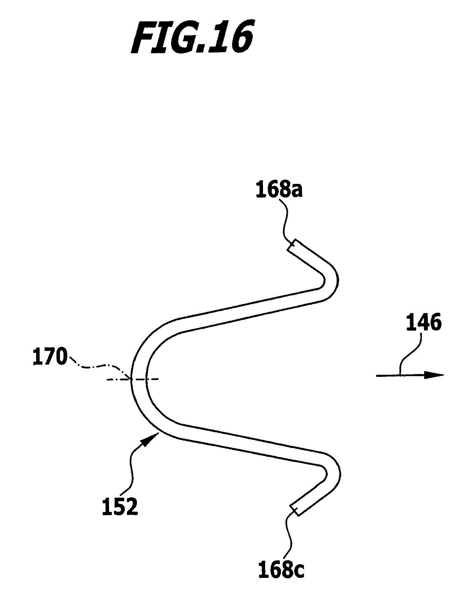

Eine in den Fig. 15 und 16 dargestellte zehnte Ausführungsform der Dichtung 110 unterscheidet sich von der in Fig. 13 dargestellten achten Ausführungsform dadurch, dass die vorderen äußeren Krallenelemente 168b und die vorderen inneren Krallenelemente 168c nicht mit den Begrenzungswänden 160 bzw. 164 des Aufnahmeraums 140 des Dichtungskörpers 128 verkrallt sind, sondern stattdessen mit der offenen Stirnfläche 144 des Dichtungskörpers 128 verkrallt sind. Bei dieser Ausführungsform erstreckt sich somit das Federelement 152 teilweise aus dem Aufnahmeraum 140 des Dichtungskörpers 128 durch die Mündungsöffnung 145 des Aufnahmeraums 140 heraus.

Im Übrigen stimmt die in den Fig. 15 und 16 dargestellte zehnte Ausführungsform der Dichtung 110 hinsichtlich Aufbau, Funktionsweise und Herstellungsweise mit der in Fig. 13 dargestellten achten Ausführungsform überein, auf deren vorstehende Beschreibung insoweit Bezug genommen wird.

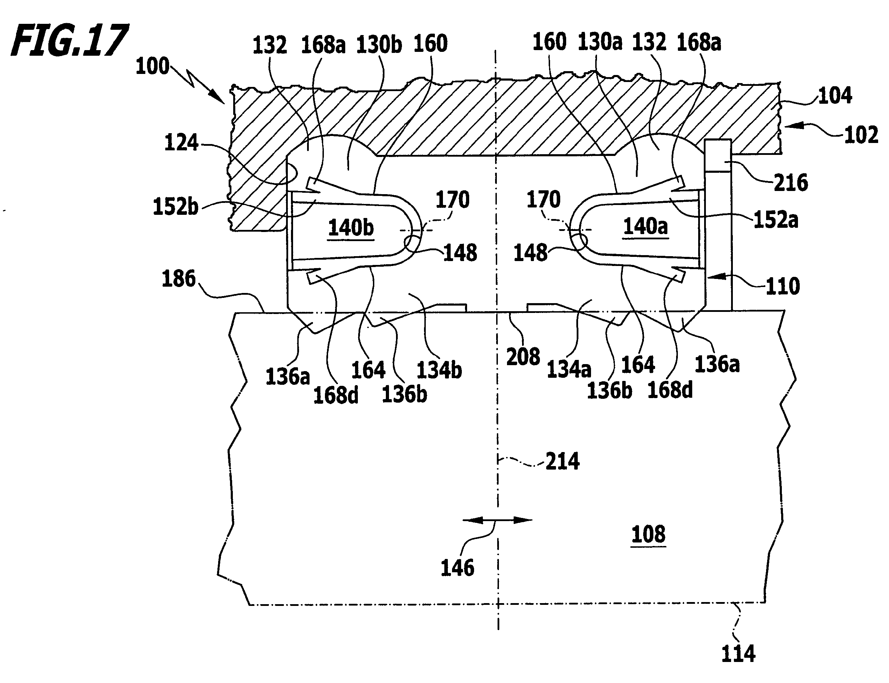

Eine in Fig. 17 dargestellte elfte Ausführungsform der Dichtung 110 unterscheidet sich von der in Fig. 8 dargestellten dritten Ausführungsform dadurch, dass bei dieser elften Ausführungsform der Dichtung 110 die Dichtung 110 als eine Doppel-Dichtung ausgebildet ist, welche nicht nur einen, sondern zwei in der Axialrichtung 146 voneinander beabstandete zweite Dichtabschnitte 134a und 134b mit jeweils zwei zweiten Dichtlippen 136a, 136b zum Abdichten gegenüber dem zweiten Bauteil 108 und und nicht nur einen, sondern zwei erste Dichtabschnitte 130a, 130b mit jeweils einer ersten Dichtlippe 132 zum Abdichten gegenüber dem ersten Bauteil 102 umfasst.

Die als Doppel-Dichtung ausgebildete Dichtung 110 kann insbesondere im Wesentlichen spiegelsymmetrisch zu einer senkrecht zur Axialrichtung 146 ausgerichteten und durch die zylindrische Anlagefläche 208 verlaufenden Quermittelebene 214 der Dichtung 110 ausgebildet sein.

Der Dichtungskörper 128 weist bei dieser Ausführungsform zwei Aufnahmeräume 140a, 140b auf, die jeweils zwischen einem ersten Dichtabschnitt 130a, 130b und einem gegenüberliegenden zweiten Dichtabschnitt 134a bzw. 134b angeordnet sind, wobei in jedem der Aufnahmeräume 140a, 140b jeweils ein Federelement 152a, 152b zumindest teilweise aufgenommen ist.

Jedes der Federelemente 152a, 152b der Dichtung 110 weist bei dieser Ausführungsform, ebenso wie bei der in Fig. 8 dargestellten Ausführungsform, an hinteren äußeren Umfangsrichtungsabschnitten 156a angeordnete hintere äußere Krallenelemente 168a auf, mittels welcher das jeweilige Federelement 152a, 152b mit der äußeren Begrenzungswand 160 des jeweiligen Aufnahmeraums 140a bzw. 140b des Dichtungskörpers 128 verkrallt ist.

Ergänzend hierzu weist jedes der Federelemente 152a, 152b, ebenso wie bei der in Fig. 8 dargestellten Ausführungsform, hintere innere Krallenelemente 168d auf, welche an hinteren inneren Umfangsrichtungsabschnitten 162a des jeweiligen Federelements 152a, 152b angeordnet sind und mit der inneren Begrenzungswand 164 des jeweiligen Aufnahmeraums 140a, 140b verkrallt sind.

Wie aus Fig. 17 zu ersehen ist, sind die hinteren äußeren Krallenelemente 168a und die hinteren inneren Krallenelemente 168d im Wesentlichen an derselben Axialposition des jeweiligen Federelements 152a, 152b, das heißt an derselben Position längs der Axialrichtung 146, angeordnet.

Die Nutgründe 148 der Aufnahmeräume 140a, 140b können bei dieser Ausführungsform gekrümmt ausgebildet und insbesondere an die Krümmung des jeweiligen Federelements 152a, 152b im Bereich der Scheitellinie 170 angepasst sein.

Bei der in Fig. 17 dargestellten Baugruppe 100 kann das erste Bauteil 102 einstückig ausgebildet sein, und der Halteabschnitt 200 des Dichtungskörpers 128 aus Fig. 8 kann bei dieser Ausführungsform entfallen.

Ferner kann vorgesehen sein, dass die Baugruppe 100 einen, vorzugsweise federelastischen, Haltering 216 umfasst, welcher an einer der Stirnfläche 124 des ersten Bauteils 102 abgewandten Seite der Dichtung 110 angeordnet ist, so dass der Dichtungskörper 128 zwischen dem Haltering 216 und der Stirnfläche 124 des ersten Bauteils 102 durch Formschluss gehalten und gegen eine Verschiebung längs der Axialrichtung 146 gesichert ist.

Die Abstreiflippe 206 der Ausführungsform aus Fig. 8 kann bei der elften Ausführungsform aus Fig. 17 entfallen; es wäre aber auch möglich, eine solche Abstreiflippe 206 zusätzlich an einem freien Ende eines der beiden zweiten Dichtabschnitte 134a, 134b anzuordnen.

Im übrigen stimmt die in Fig. 17 dargestellte elfte Ausführungsform der Dichtung 110 hinsichtlich Aufbau, Funktionsweise und Herstellungsweise mit der in Fig. 8 dargestellten dritten Ausführungsform überein, auf deren vorstehende Beschreibung insoweit Bezug genommen wird.

## Patentansprüche

1. Dichtung zum Abdichten eines Dichtspalts (112) zwischen einem ersten Bauteil (102) und einem zweiten Bauteil (108), umfassend
einen Dichtungskörper (128) mit mindestens einem Dichtabschnitt (130, 134) und
mindestens ein Federelement (152) zum Vorspannen des Dichtabschnitts (130, 134) gegen mindestens eines der abzudichtenden Bauteile (102, 108),
wobei das Federelement (152) zumindest teilweise in einem Aufnahmeraum (140) des Dichtungskörpers (128) angeordnet ist und
wobei das Federelement (152) mindestens ein Krallenelement (168) aufweist, mittels welchem das Federelement (152) mit dem Dichtungskörper (128) verkrallt ist,
**dadurch gekennzeichnet,**
**dass** das Federelement (152) einen mäanderförmigen Grundkörper (154) umfasst und dass mindestens ein Krallenelement (168) mindestens einen an dem Grundkörper (154) des Federelements (152) angeordneten Vorsprung (172) umfasst.

2. Dichtung nach Anspruch 1, **dadurch gekennzeichnet, dass** der Dichtungskörper (128) ringförmig ausgebildet ist und dass mindestens ein Krallenelement (168) an einem Umfangsrichtungsabschnitt (156, 162) des Grundkörpers (154) des Federelements (152) angeordnet ist, welcher sich im Wesentlichen längs der Umfangsrichtung (158) des Dichtungskörpers (128) erstreckt.

3. Dichtung nach einem der Ansprüche 1 oder 2, **dadurch gekennzeichnet, dass** der Aufnahmeraum (140) des Dichtungskörpers (128) an einer Mündungsöffnung (145) in einen Außenraum des Dichtungskörpers (128) mündet.

4. Dichtung nach Anspruch 3, **dadurch gekennzeichnet, dass** das Federelement (152) mindestens zwei Krallenelemente (168) aufweist, welche in im Wesentlichen demselben Abstand von der Mündungsöffnung (145) des Aufnahmeraums (140) angeordnet sind.

5. Dichtung nach einem der Ansprüche 3 oder 4, **dadurch gekennzeichnet, dass** das Federelement (152) mindestens zwei Krallenelemente (168) aufweist, welche in unterschiedlichen Abständen von der Mündungsöffnung (145) des Aufnahmeraums (140) angeordnet sind.

6. Dichtung nach einem der Ansprüche 1 bis 5, **dadurch gekennzeichnet, dass** der Dichtungskörper (128) einen ersten Dichtabschnitt (130) zum Anlegen an das erste Bauteil (102) und einen zweiten Dichtabschnitt (134) zum Anlegen an das zweite Bauteil (108) umfasst,
wobei das Federelement (152) im montierten Zustand der Dichtung (110) den ersten Dichtabschnitt (130) gegen das erste Bauteil (102) und den zweiten Dichtabschnitt (134) gegen das zweite Bauteil (108) vorspannt.

7. Dichtung nach Anspruch 6, **dadurch gekennzeichnet, dass** das Federelement (152) mindestens ein Krallenelement (168a, 168b) aufweist, das mit dem ersten Dichtabschnitt (130) verkrallt ist, und mindestens ein Krallenelement (168c, 168d) aufweist, das mit dem zweiten Dichtabschnitt (134) verkrallt ist.

8. Dichtung nach einem der Ansprüche 6 oder 7, **dadurch gekennzeichnet, dass** das Federelement (152) mindestens zwei Krallenelemente (168a, 168b; 168c, 168d) aufweist, die mit demselben der beiden Dichtabschnitte (130, 134) verkrallt sind.

9. Dichtung nach einem der Ansprüche 1 bis 8, **dadurch gekennzeichnet, dass** das Federelement (152) mindestens ein Krallenelement (168) aufweist, das an einer Begrenzungswand (160, 164) des Aufnahmeraums (140) mit dem Dichtungskörper (128) verkrallt ist.

10. Dichtung nach einem der Ansprüche 1 bis 9, **dadurch gekennzeichnet, dass** das Federelement (152) mindestens ein Krallenelement (168) aufweist, das außerhalb des Aufnahmeraums (140) mit dem Dichtungskörper (128) verkrallt ist.

11. Dichtung nach Anspruch 10, **dadurch gekennzeichnet, dass** der Dichtungskörper (128) eine neben dem Aufnahmeraum (140) angeordnete Stirnfläche (144) aufweist, wobei mindestens ein Krallenelement (168) an dieser Stirnfläche (144) mit dem Dichtungskörper (128) verkrallt ist.

12. Dichtung nach einem der Ansprüche 1 bis 11, **dadurch gekennzeichnet, dass** der Dichtungskörper (128) keinen Rückhaltevorsprung zum Zurückhalten des Federelements (152) in dem Aufnahmeraum (140) aufweist.

13. Dichtung nach einem der Ansprüche 1 bis 12, **dadurch gekennzeichnet, dass** der Dichtungskörper (128) ein Polytetrafluorethylen-Material, ein Polytetrafluorethylen-Compound, ein modifiziertes Polytetrafluorethylen-Material und/oder ein modifiziertes Polytetrafluorethylen-Compound umfasst.

14. Dichtung nach einem der Ansprüche 1 bis 13, **dadurch gekennzeichnet, dass** der Dichtungskörper (128) ein schmelzverarbeitbares Tetrafluorethylen-Copolymer oder ein Compound eines schmelzverarbeitbaren Tetrafluorethylen-Copolymers umfasst.

15. Dichtung nach einem der Ansprüche 1 bis 14, **dadurch gekennzeichnet, dass** der Dichtungskörper (128) mindestens zwei in einer Axialrichtung (146) des Dichtungskörpers (128) voneinander beabstandete Dichtabschnitte (130a, 130b, 134a, 134b) umfasst.

16. Verfahren zum Herstellen einer Dichtung (110) zum Abdichten eines Dichtspalts (112) zwischen einem ersten Bauteil (102) und einem zweiten Bauteil (108), umfassend folgende Verfahrensschritte:
- Herstellen eines Dichtungskörpers (128) mit mindestens einem Dichtabschnitt (130, 134) und einem Aufnahmeraum (140);
- Herstellen eines Federelements (152) mit mindestens einem Krallenelement (168), wobei das Federelement (152) einen mäanderförmigen Grundkörper (154) umfasst und mindestens ein Krallenelement (168) mindestens einen an dem Grundkörper (154) des Federelements (152) angeordneten Vorsprung (172) umfasst;
- zumindest teilweises Einbringen des Federelements (152) in den Aufnahmeraum (140) des Dichtungskörpers (128), wobei das Federelement (152) durch mindestens ein Krallenelement (168) mit dem Dichtungskörper (128) verkrallt wird.

## Claims

1. Seal for sealing a sealing gap (112) between a first component (102) and a second component (108), comprising a seal body (128) with at least one sealing portion (130, 134) and at least one spring element (152) for prestressing the sealing portion (130, 134) against at least one of the components (102, 108) to be sealed, the spring element (152) being arranged at least partially in a receiving space (140) of the seal body (128) and the spring element (152) having at least one claw element (168), by means of which the spring element (12) is interlocked with the seal body (128),
**characterised in that**
the spring element (152) has a base body (154) that is meandering in shape and **in that** at least one claw element (168) comprises at least one projection (172) arranged on the base body (154) of the spring element (152).

2. Seal according to claim 1, **characterised in that** the seal body (128) is annular and **in that** at least one claw element (168) is arranged on a peripheral direction portion (156, 162) of the base body (154) of the spring element (152), which extends substantially along the peripheral direction (158) of the seal body (128).

3. Seal according to either of claims 1 or 2, **characterised in that** the receiving space (140) of the seal body (128) opens at a mouth opening (145) into an outer space of the seal body (128).

4. Seal according to claim 3, **characterised in that** the spring element (152) has at least two claw elements (168), which are arranged substantially at the same spacing from the mouth opening (145) of the receiving space (140).

5. Seal according to either of claims 3 or 4, **characterised in that** the spring element (152) has at least two claw elements (168), which are arranged at different spacings from the mouth opening (145) of the receiving space (140).

6. Seal according to any one of claims 1 to 5, **characterised in that** the seal body (128) comprises a first sealing portion (130) for placement on the first component (102) and a second sealing portion (134) for placement on the second component (108), wherein, in the assembled state of the seal (110), the spring element (152) prestresses the first sealing portion (130) against the first component (102) and the second sealing portion (134) against the second component (108).

7. Seal according to claim 6, **characterised in that** the spring element (152) has at least one claw element (168a, 168b), which is interlocked with the first sealing portion (130), and has at least one claw element (168c, 168d), which is interlocked with the second sealing portion (134).

8. Seal according to either of claims 6 or 7, **characterised in that** the spring element (152) has at least two claw elements (168a, 168b; 168c, 168d), which are interlocked with the same one of the two sealing portions (130, 134).

9. Seal according to any one of claims 1 to 8, **characterised in that** the spring element (152) has at least one claw element (168), which is interlocked with the seal body (128) at a boundary wall (160, 164) of the receiving space (140).

10. Seal according to any one of claims 1 to 9, **characterised in that** the spring element (152) has at least one claw element (168), which is interlocked with the seal body (128) outside of the receiving space (140).

11. Seal according to claim 10, **characterised in that** the seal body (128) has an end face (144) arranged next to the receiving space (140), at least one claw element (168) being interlocked with the seal body (128) at this end face (144).

12. Seal according to any one of claims 1 to 11, **characterised in that** the seal body (128) does not have a retaining projection to retain the spring element (152) in the receiving space (140).

13. Seal according to any one of claims 1 to 12, **characterised in that** the seal body (128) comprises a polytetrafluoroethylene material, a polytetrafluoroethylene compound, a modified polytetrafluoroethylene material and/or a modified polytetrafluoroethylene compound.

14. Seal according to any one of claims at 1 to 13, **characterised in that** the seal body (128) comprises a melt-processable tetrafluoroethylene copolymer or a compound of a melt-processable tetrafluoroethylene copolymer.

15. Seal according to any one of claims 1 to 14, **characterised in that** the seal body (128) comprises at least two sealing portions (130a, 130b, 134a, 134b) spaced apart from one another in an axial direction (146) of the seal body (128).

16. Method for producing a seal (110) for sealing a sealing gap (112) between a first component (102) and a second component (108), comprising the following method steps:
- producing a seal body (128) with at least one sealing portion (130, 134) and a receiving space (140);
- producing a spring element (152) with at least one claw element (168), the spring element (152) comprising a base body (154) that is meandering in shape and at least one claw element (168) comprising at least one projection (172) arranged on the base body (154) of the spring element (152);
- at least partially introducing the spring element (152) into the receiving space (140) of the seal body (128), the spring element (152) being interlocked with the seal body (128) by at least one claw element (168).

## Revendications

1. Joint d'étanchéité servant à étanchéifier une fente étanche (112) entre un premier élément (102) et un deuxième élément (108), comprenant un corps d'étanchéité (128) doté au moins d'une section étanche (130, 134), et
au moins un élément formant ressort (152) servant à précontraindre la section étanche (130, 134) contre au moins un des éléments (102, 108) à étanchéifier,
l'élément formant ressort (152) étant disposé au moins en partie dans un espace de réception (140) du corps d'étanchéité (128) et
l'élément formant ressort (152) présentant au moins un élément à griffes (168), au moyen duquel l'élément formant ressort (152) est accroché au corps d'étanchéité (128),
**caractérisé en ce que**
l'élément formant ressort (152) comprend un corps de base (154) en forme de serpentins, et **en ce qu'**au moins un élément à griffes (168) comprend au moins une partie saillante (172) disposée au niveau du corps de base (154) de l'élément formant ressort (152).

2. Joint d'étanchéité selon la revendication 1, **caractérisé en ce que** le corps d'étanchéité (128) est réalisé de manière à présenter une forme annulaire, et **en ce qu'**au moins un élément à griffes (168) est disposé au niveau d'une section de direction périphérique (156, 162) du corps de base (154) de l'élément formant ressort (152), laquelle section s'étend essentiellement le long de la direction périphérique (158) du corps d'étanchéité (128).

3. Joint d'étanchéité selon l'une quelconque des revendications 1 ou 2, **caractérisé en ce que** l'espace de réception (140) du corps d'étanchéité (128) débouche au niveau d'une ouverture d'embouchure (145) dans un espace extérieur du corps d'étanchéité (128).

4. Joint d'étanchéité selon la revendication 3, **caractérisé en ce que** l'élément formant ressort (152) présente au moins deux éléments à griffes (168), qui sont disposés essentiellement à la même distance de l'ouverture d'embouchure (145) de l'espace de réception (140).

5. Joint d'étanchéité selon l'une quelconque des revendications 3 ou 4, **caractérisé en ce que** l'élément formant ressort (152) présente au moins deux éléments à griffes (168), qui sont disposés à des distances différentes de l'ouverture d'embouchure (145) de l'espace de réception (140).

6. Joint d'étanchéité selon l'une quelconque des revendications 1 à 5, **caractérisé en ce que** le corps d'étanchéité (128) comprend une première section étanche (130) destinée à être posée au niveau du premier élément (102) et une deuxième section étanche (134) destinée à être posée au niveau du deuxième élément (108),
l'élément formant ressort (152) précontraignant, lorsque le joint d'étanchéité (110) se trouve dans l'état monté, la première section étanche (130) contre le premier élément (102) et la deuxième section étanche (134) contre le deuxième élément (108).

7. Joint d'étanchéité selon la revendication 6, **caractérisé en ce que** l'élément formant ressort (152) présente au moins un élément à griffes (168a, 168b), qui est accroché à la première section étanche (130), et au moins un élément à griffes (168c, 168d), qui est accroché à la deuxième section étanche (134).

8. Joint d'étanchéité selon l'une quelconque des revendications 6 ou 7, **caractérisé en ce que** l'élément formant ressort (152) présente au moins deux éléments à griffes (168a, 168b ; 168c, 168d)), qui sont accrochés à la même des deux sections étanches (130, 134).

9. Joint d'étanchéité selon l'une quelconque des revendications 1 à 8, **caractérisé en ce que** l'élément formant ressort (152) présente au moins un élément à griffes (168), qui est accroché au corps d'étanchéité (128), au niveau d'une paroi de délimitation (160, 164) de l'espace de réception (140).

10. Joint d'étanchéité selon l'une quelconque des revendications 1 à 9, **caractérisé en ce que** l'élément formant ressort (152) présente au moins un élément à griffes (168), qui est accroché au corps d'étanchéité (128) en dehors de l'espace de réception (140).

11. Joint d'étanchéité selon la revendication 10, **caractérisé en ce que** le corps d'étanchéité (128) présente une face frontale (144) disposée à côté de l'espace de réception (140), au moins un élément à griffes (168) étant accroché au corps d'étanchéité (128), au niveau de ladite face frontale (144).

12. Joint d'étanchéité selon l'une quelconque des revendications 1 à 11, **caractérisé en ce que** le corps d'étanchéité (128) ne présente aucune partie saillante de maintien servant à retenir l'élément formant ressort (152) dans l'espace de réception (140).

13. Joint d'étanchéité selon l'une quelconque des revendications 1 à 12, **caractérisé en ce que** le corps d'étanchéité (128) comprend un matériau à base de polytétrafluoréthylène, un composé à base de polytétrafluoréthylène, un matériau modifié à base de polytétrafluoréthylène et/ou un composant modifié à base de polytétrafluoréthylène.

14. Joint d'étanchéité selon l'une quelconque des revendications 1 à 13, **caractérisé en ce que** le corps d'étanchéité (128) comprend un copolymère à base de tétrafluoréthylène pouvant être transformé par fusion ou un composé d'un copolymère à base de tétrafluoréthylène pouvant être transformé par fusion.

15. Joint d'étanchéité selon l'une quelconque des revendications 1 à 14, **caractérisé en ce que** le corps d'étanchéité (128) comprend au moins deux sections étanches (130a, 130b, 134a, 134b) espacées l'une de l'autre dans une direction axiale (146) du corps d'étanchéité (128).

16. Procédé de fabrication d'un joint d'étanchéité (110) servant à étanchéifier une fente étanche (112) entre un premier élément (102) et un deuxième élément (108), comprenant les étapes suivantes consistant à :
- fabriquer un corps d'étanchéité (128) doté au moins d'une section étanche (130, 134) et d'un espace de réception (140) ;
- fabriquer un élément formant ressort (152) doté au moins d'un élément à griffes (168), l'élément formant ressort (152) comprenant un corps de base (154) en forme de serpentins et au moins un élément à griffes (168) comprenant au moins une partie saillante (172) disposée au niveau du corps de base (154) de l'élément formant ressort (152) ;
- installer au moins en partie l'élément formant ressort (152) dans l'espace de réception (140) du corps d'étanchéité (128), l'élément formant ressort (152) étant accroché au corps d'étanchéité (128) par au moins un élément à griffes (168).
